# EUROPEAN PATENT APPLICATION

(11) **EP 4 776 593 A1**
(43) Date of publication of application: **15.07.2026**
(21) Application number: 25151588.8
(22) Date of filing: 13.01.2025
(51) Int. Cl.: H04L 45/74, H04L 47/43, H04W 40/02, H04W 76/14, H04W 84/18

(54) **DEVICE FOR ROUTED MULTI-HOP COMMUNICATION IN MESH NETWORKS**

(71) Applicant: Fraunhofer-Gesellschaft zur Förderung der angewandten Forschung e.V., 80686 München (DE)
(72) Inventor: Thome, Moritz, 91058 Erlangen (DE); Schrauth, Manuel, 91058 Erlangen (DE); Ohlenforst, Torsten, 91058 Erlangen (DE); Kreyß, Felix, 91058 Erlangen (DE)
(74) Representative: Schlenker, Julian

(57) **Abstract**

Embodiments provide a first network node for a wireless ad-hoc network, wherein the network node is configured to receive from a second network node of the wireless ad-hoc network one or more chunks of a data package via a first point-to-point connection, wherein the one or more chunks comprise a target address information describing a target address of the data package, wherein the network node is configured to select using a routing information, based on the target address information, a third network node of the wireless ad-hoc network, wherein the network node is configured to transmit the one or more chunks or a further processed version thereof to the third network node via a second point-to-point connection.

## Description

Embodiments of the present application relate to the field of wireless ad-hoc networks, and more specifically, to a network node for a wireless ad-hoc network. Some embodiments relate to a device for routed multi-hop communication in mesh networks.

Edge computing is a distributed computing paradigm that brings computation and data storage closer to the sources of data (i.e. the edge of the network), aiming to reduce latency, conserve bandwidth, and ensure data sovereignty [2, 3, 4]. Unlike cloud computing, which relies on large-scale data centers, edge computing processes data at or near the point where it is generated, for instance in loT devices, sensors, or local edge servers. If a network comprising multiple such devices is deployed in the edge, it is referred herein to as an edge network. By enabling local data processing, edge networks and edge computing in general enhance data security and privacy, as sensitive information is not resorted to the cloud.

Every communication network encounters a certain degree of volatility among its agents. This can range from minor latency issues in internet-based connections to more severe disruptions, such as participants being disconnected, interrupted, or failing due to various reasons. Given an edge network consisting of different nodes (which can include servers, routers, switches, computers, smartphones, wearables, loT devices, and other devices), those nodes can be unstable or unreliable due to reasons such as:
- Hardware Failures: Physical damage of hardware components can cause a node to become unreliable or fail entirely.
- Software Issues: Bugs, incompatible updates, or malicious software (malware) can disrupt the normal functioning of network devices.
- Power Outages: Interruptions in power supply can render nodes temporarily inoperative.
- Topology Changes: For networks relying on mobile nodes, the network topology - the arrangement of nodes and connections - changes dynamically. This can complicate routing decisions and lead to increased latency or packet loss as the network continuously adjusts to the new layouts.

Furthermore, connection issues pertain to the problems in the links or pathways that connect the nodes within a network. These issues can arise due to:
- Physical Damage: Wires, cables, and other physical mediums can suffer damage from environmental factors, construction activities, or accidents, disrupting the connection.
- Signal Interference: For wireless connections, interference from other wireless devices, physical obstructions, or even weather conditions can weaken or disrupt the signal.
- Network Congestion: High traffic volumes can congest network pathways, slowing down data trans-mission or causing timeouts.

Mobile Ad-hoc Networks (MANETs) represent a field of technology focused on decentralized and selfconfiguring networks, that excel in scenarios where traditional infrastructure is unavailable or impractical. They are widely applied in disaster recovery, environmental or construction monitoring, vehicular networks, remote healthcare or event coverage. MANETs provide flexibility, rapid deployment, and reliable communication in dynamic environments. From the technical standpoint, their dynamic nature poses significant
challenges.

Traditional routing protocols like Ad-hoc On-Demand Distance Vector (AODV) [5] and Dynamic Source Routing (DSR) [6] are well-known for their reactive mechanisms but struggle with high mobility, leading to routing overhead and frequent route failures [7]. Research has introduced several enhancements, including proactive, hierarchical, and QoS-aware routing protocols, to mitigate these issues.

Proactive protocols like Destination-Sequenced Distance Vector (DSDV) maintain routing tables continuously, offering reduced latency at the cost of higher overhead [8]. Hierarchical routing organizes nodes into clusters, improving scalability and reducing route maintenance effort. QoS-aware protocols, such as adaptive QoS AODV [9], optimize network resources to support real-time data transmission by dynamically prioritizing traffic based on delay and bandwidth requirements.

Wireless mesh networking technologies enable decentralized communication among devices without requiring centralized infrastructure. Notable examples include Bluetooth Mesh, Zigbee, Thread, and Wi-Fi Mesh.

Bluetooth Mesh, introduced in Bluetooth 5, extends Bluetooth Low Energy (BLE) to support many-to-many device communications in mesh topologies. It is optimized for applications such as building automation and sensor networks, employing a managed flooding approach for message propagation [5]. In managed flooding, messages are retransmitted by intermediate nodes based on strict relay and TTL parameters, ensuring network-wide message delivery at the expense of potential congestion and inefficiency in large or dynamic networks. While this method simplifies network management, it lacks advanced routing mechanisms, leading to non-optimal performance in terms of latency and scalability. Bluetooth Mesh has a theoretical hop-to-hop data rate of 1 Mbps on link-level [6], but in real-world conditions, effective throughput is significantly lower (3.79 kbps) due to protocol overhead, retransmissions, and collisions [7]. Furthermore, its reliance on role-based functionality (e.g., relay, proxy, or friend nodes) limits node uniformity, making it less suited for fully ad-hoc network scenarios where roles should adapt dynamically.

Zigbee, and the closely related Thread protocol, are based on the IEEE 802.15.4 standard and focus on low-power operation for resource-constrained devices in applications such as home automation, industrial systems, and medical monitoring [8]. Zigbee uses a hierarchical approach with defined coordinator, router, and end devices, while Thread improves upon this with IP-based communication and dynamic, self-healing routing [9]. Both technologies are limited by a maximum hop-to-hop data rate of 250 kbps [8], with actual throughput being much lower (47 kbps) in practical deployments due to protocol overhead, routing, and interference [7].

Wi-Fi Mesh networks, including those based on IEEE 802.11s, enable high-throughput multi-hop communication with theoretical hop-to-hop rates reaching several hundred Mbps [10]. However, the high power consumption renders it unsuitable for battery-powered deployments, especially when compared to Zigbee or Thread, which typically consume less than 100 mW in active modes [8]. Additionally, the complexity of topology management and routing maintenance in Wi-Fi Mesh poses challenges for networks with constrained hardware or dynamic topology changes.

Meshmerize is a mesh networking solution designed for industrial applications, with a particular focus on high-density environments such as automated warehouses and robotics. The protocol provides high-throughput and low-latency communication, critical for applications that require constant connectivity and reliable performance, even in environments with frequent obstacles and changing conditions. The technol-ogy relies on high-throughput IP-based communication such as Wi-Fi, 5G, or Ethernet [11].

Meshmerize is built on a multipath routing protocol that ensures reliability by sending data over multiple paths, thus preventing single points of failure. The system is not optimized for ultra-low-power devices but instead requires Linux nodes and a minimum of 4 MB of RAM for effective operation [11].

Key features of Meshmerize include seamless roaming, high scalability, and the ability to prioritize traffic to ensure that time-sensitive data (e.g., control signals) is transmitted first.

Another known wireless network is BATMAN (Better Approach to Mobile Adhoc Networking).

BATMAN is a decentralized mesh networking protocol that enables scalable, self-organizing networks. Primarily used in community-driven mesh networks, BATMAN is well-suited for urban environments where flexible, large-scale internet access is needed. The protocol uses a proactive routing approach, where nodes regularly exchange routing information to ensure that all network participants have up-to-date data for making routing decisions.

One of the unique features is the use of forwarded routing information about neighboring stations in order to create an independent routing table. This allows each node to make routing decisions based on the most current network topology, without relying on a centralized server. The proactive nature of this approach renders that network quickly adaptable to changes in node positions or network availability, ensuring continuous connectivity [12].

BATMAN is built for applications where high scalability is a priority, such as public Wi-Fi networks or large community mesh deployments.

Another known wireless network is Bluetooth low energy (BLE).

In BLE, roles define how devices interact during communication. The Central role initiates and manages connections, while the Peripheral role advertises its presence and accepts connections. Multi-role operation enables a device to act as both Central and Peripheral concurrently if supported by its hardware and software. This section details BLE advertising, scanning, and connection processes, including relevant packet structures specified in Bluetooth 5.4 [6].

Subsequently, advertising modes of BLE are described.

In BLE, advertising is the primary mechanism for devices to broadcast their presence, communicate data, or signal availability for connections. The type of advertisements are discussed in the following:
- ADV_IND is a connectable advertisement. It signals that the device is available to accept connections from other devices. This mode is typically used by Peripheral devices to make themselves discoverable by another device. The ADV_IND packet can include information such as the device address, available services, and additional identifiers. When a Central device receives an ADV_IND advertisement, it can initiate a connection by sending a CONNECT_IND packet. This connection request must be transmitted immediately following the reception of the advertisement and within a short, predefined window (1.25-10ms) as specified in the Bluetooth Core Specification. This timing ensures that the advertising device remains synchronized and ready to process the connection request.
- ADV_DIRECT_IND is a directed advertisement, targeting a specific device by including the target's ad-dress in the advertisement payload. This mode is typically used when a Peripheral device seeks to establish a connection with a known Central device quickly. Connection initiating follows identical procedure as described for ADV_IND.
- ADV_NOCONN_IND is a non-connectable advertisement. It is typically used by devices that are advertising information but are not currently in a state to establish a connection.

The structure of an advertisement packet is standardized as per the Bluetooth Core Specification. Table 1 outlines the packet structure for the ADV_IND type.

Specifically, the following table 1 describes a Byte-level structure of a Bluetooth Low Energy advertisement packet.

**Table 1**

| **Field** | **Size (bytes)** | **Description** |
|---|---|---|
| Preamble | 1 | Used for synchronization between devices. |
| Access Address | 4 | Fixed value (0x8E89BED6) for all advertisement channels. |
| Header | 2 | Contains information about the packet type, payload length, and control flags. |
| Advertisement Address | 6 | Identifies the transmitting device; can be static or randomly generated. |
| Advertisement Data | 0-31 | User-defined payload, such as device name, UUIDs, or service data. |
| CRC | 3 | Ensures data integrity by detecting transmission errors. |

When a device sends an advertisement, it broadcasts this data on the three primary advertisement channels (37, 38, and 39) in a round-robin sequence. Advertisements are sent at intervals defined by the advertising interval, which ranges from 20 ms to 10.24 s. Data Payload can be up to 31 bytes in length (cf. Table 1).

Subsequently, scanning in BLE is described.

Scanning allows a device to listen for advertisements by other devices. Main purpose of scanning is to detect advertisement packets, such as ADV_IND and establish connections. Passive scanning is the most energy-efficient mode, as the scanning device listens for advertisements without responding to them.

In a multi-role setup, it is possible for a BLE device to use multiple radios, allowing it to perform different roles simultaneously. For instance, one radio can be dedicated to advertising (e.g. using ADV_IND), while the other radio is used for passive scanning. This setup enables the device to advertise its presence while also listening for advertisements from other devices, effectively supporting both roles without the need to switch between them.

In a standard single-radio setup, in contrast, a device can only either advertise or scan at any given moment, as both tasks require the radio to be switched between transmit and receive modes.

Subsequently, connections in BLE are described.

Connections in BLE are initiated by a Central device, which sends a CONNECT_IND PDU to a Peripheral device that has advertised using either ADV_IND or ADV_DIRECT_IND. Upon receiving the CONNECT _IND, both devices transition to the connected state.

Once the connection is established, communication is bidirectional. The connection supports various data rates, including the standard 1 Mbps rate and the higher 2 Mbps rate introduced in Bluetooth 5, which provides faster data transfer over shorter ranges. BLE also allows the use of the long-range modes (500 kbps and 125 kbps) in scenarios requiring extended communication distances.

To handle interference, BLE utilizes frequency hopping across 40 channels in the 2.4 GHz ISM band. This frequency hopping reduces the likelihood of interference from other devices operating on the same frequency band and thus helps maintaining a stable connection. The devices synchronize their hopping patterns to ensure proper data exchange without collisions. BLE connections also have a defined duration, with devices capable of maintaining a connection as long as necessary, subject to supervision timeouts and other parameters that determine the connection duration. If no data is exchanged for a specified period (supervision timeout), the connection is considered lost, and one or both devices may disconnect.

The maximum payload size per packet for a BLE connection is defined as 251 bytes, at which maximum throuput is achieved. If a larger data transfer is required, the data is split across multiple packets, ensuring reliable transmission through error control mechanisms like acknowledgment and retransmissions. If a packet is lost or corrupted, it will be retransmitted until successfully received, ensuring reliable data delivery.

If the connection is lost due to factors like timeout or interference, either device can terminate the connection by sending a DISCONNECT_REQ packet. Upon termination, both devices stop communication and return to their respective roles. In case of a connection loss, both the sender and receiver are informed through appropriate signaling, and the devices can transition to a state where they can either resume advertising, scanning, or remain idle.

Another approach of wireless ad-hoc networks is the framework RANDLE, short for Routed ad hoc Networks for dynamic and low power Environments [1]. RANDLE was introduced as a solution to enable distributed inference of large neural networks on resource-constrained edge devices through ad-hoc networking based on the Bluetooth Low Energy (BLE) protocol. It facilitates the formation of a self-organizing, autonomous network where devices communicate with each other without the need for centralized infrastructure or base stations. This is particularly valuable in scenarios where stable connectivity or adequate cellular coverage is unreliable or unavailable.

In the framework, individual nodes exchange routing information using lightweight advertisement packets known as Lookup Table Advertisements (LUT-ADs). Nodes that receive a LUT-AD build and maintain their routing tables, which contain condensed information about the best routes to reach other nodes in the network. By this mechanism, nodes can adapt to changes in network topology due to frequent joins, leaves, or movements of devices, thus maintaining consistent and updated routing information.

The routing protocol is designed to be simple and energy-efficient, acknowledging the limited processing power and battery life of edge devices, such as sensors, robots, drones or other loT devices. RANDLE ensures that nodes are aware of the network structure and routes to next hops, even in a high dynamic environment.

RANDLE is built around lightweight broadcast messages that are sent throughout the network at regular intervals. These are referred to as Lookup-Table-Advertisement (LUT-AD) and are broadcasted by any node. The MANET concept is based on table-driven broadcast routing.

Identical background processes run on each participating node to distribute routing information across the ad-hoc network. Based around a default state named Listen, the device is ready to receive LUT-ADs from other nodes. When a LUT-AD arrives, it is reflected towards other nodes in the network. The received LUT-AD is parsed and merged with the existing routing table.

At several predefined time intervals, each node provides routing information by transmitting LUT-ADs, which are reflected by receiving nodes. These intervals vary in order to maximize energy and channel efficiency. Hence, even without topology changes in the network, so-called keepalive messages are sent. This ensures that even in static networks, constant connectivity is maintained through current routing tables.

The edge weight of a route is consistently reduced by a variable factor < 1 when messages are reflected. This allows for route prioritization based on edge weights in order to identify the best path for a directed external data packet. Automatically, routes with multiple waypoints may have a lower edge weight compared to routes with fewer hops.

Nodes are therefore receiving direct and reflected LUT-ADs from other nodes, possible multiple times over different routes with different weights.

The LUT of each node contains a variety of information. It records which nodes are known in the network. For each recognized route, there is a table entry with information about the edge weight and next hop in routing. A timestamp ensures that obsolete routes are removed from the LUT.

Nodes leaving the ad-hoc network are removed from the respective LUTs due to the absence of their periodically sent LUT-ADs. Due to the previously described algorithm, the departing node recognizes the lost network connection to its former network members, who are executing identical processes due the absence of receiving LUT-ADs from them.

In order to enable network members to exchange data with each other, even if they are not directly reachable, it is necessary to route packets through multiple nodes that can establish a connection to the next hop. This correpsonds to the subject matter this invention and described in detail in the remainder of the manuscript.

A scenario can be considered where small, battery-powered computing devices (such as sensors, tiny robots, drones, animal tags, IoT devices, or similar) need to exchange data wirelessly in environments without external network infrastructure (e.g., cellular coverage or base stations) or where such infrastructure is unreliable. In particular, this includes situations where devices can be considered volatile, i.e. they join and leave the network spontaneously and dynamically (e.g., when they fall out of range or when their battery is low).

In such a scenario a network architecture would be desirable that can handle (highly) dynamic topology as well as for an efficient communication system. Efficiency refers to the resource cost per unit of transmitted data. This encompasses energy consumption, device weight, hardware complexity, and other factors, particularly relevant in scenarios involving low-power devices.

It would be desirable that the communication system is able to deliver considerable throughput in order to accommodate data-intensive applications, such as image transmission, while simultaneously ensuring the efficiency outlined previously. Thereby, considering a mesh network, adding more devices can inflate throughput metrics (like end-to-end or aggregate throughput) simply because additional routes or relays become available. However, this comes at the cost of increased overhead, interference, and complexity. A more appropriate measure is hence a normalized throughput, i.e. per node, which reflects the effective throughput contribution of each device. Similarly, in spatially distributed networks, this can be related to throughput density (throughput per unit area).

Further, it would be desirable that the communication system provides low latency and high availability, rendering it suitable for real-time applications.

Currently, no known solution combines all of these factors. Available mesh network options, such as Zigbee, are not designed for high throughput, while others, like Wi-Fi, are not suitable for low energy consumption.

Therefore, there is the need for improvements or enhancements with respect to communication efficiency, latency and/or throughput in a wireless ad-hoc network.

It is noted that the information in the above section is only for enhancing the understanding of the background of the invention and therefore it may contain information that does not form prior art and is already known to a person of ordinary skill in the art.

Embodiments of the present invention are described herein making reference to the appended drawings.
- Fig. 1: is a schematic representation of a wireless ad-hoc network 100 comprising a plurality of network nodes,
- Fig. 2: shows a schematic representation of a high-level data flow in a wireless ad-hoc network,
- Fig. 3: shows a schematic representation of transmissions between network nodes of a wireless ad-hoc network at different time instants,
- Fig. 4: shows a schematic representation of the state machine of a network node with a single radio unit, which can assume the roles of Sender S, Receiver R, and Maintainer M,
- Fig. 5: shows a schematic representation of a transmission process between network nodes of a wireless ad-hoc network, at least some network nodes of the which having network controllers with two or more radio units,
- Fig. 6: shows a schematic representation of a petri net describing a behavior of a network node having two radio units,
- Fig. 7: shows a sequence diagram of a data transfer between network nodes of a wireless ad-hoc network, each of the network nodes using a single radio,
- Fig. 8: shows a sequence diagram of a data transfer between network nodes of a wireless ad-hoc network, at least some of the network nodes using multiple radio units, and
- Fig. 9: illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

Subsequently described embodiments allow for improving communication efficiency, latency and/or throughput in a wireless ad-hoc network.

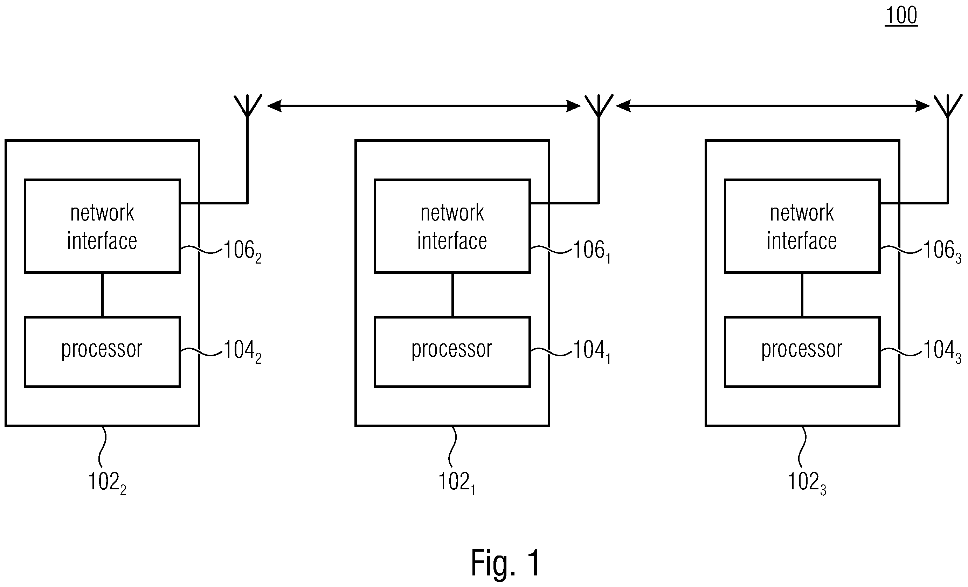

Embodiments of the present invention may be implemented in a wireless ad-hoc network 100 as depicted in Fig. 1. Specifically, Fig. 1 is a schematic representation of a wireless ad-hoc network 100 comprising a plurality of network nodes, where by way of example three network nodes 102₁, 102₂, 102₃ are shown. In general, the wireless ad-hoc network 100 can comprise up to x network nodes, wherein x is a natural number greater than or equal to three, x ≥ 3, such as, for example, 3, 4, 5, 10, 20, 30, 50, 100 or even more network nodes. The network nodes 102₁, 102₂, 102₃ might communicate directly with each other or via a network (e.g., backend). The network nodes 102₁, 102₂, 102₃ might include a processor 104₁, 104₂, 104₃ and a network interface 106₁, 106₂, 106₃.

Embodiments provide a first network node [e.g., forwarding network node] for a wireless ad-hoc network, wherein the network node is configured to receive from a second network node [e.g., origin or second forwarding network node] of the wireless ad-hoc network one or more chunks [e.g., (different) parts or segments or slices] of a data package via a first point-to-point connection, wherein the one or more chunks comprise a target address information describing a target address of the data package [e.g., the target address specifying a target network node], wherein the network node is configured to select using a routing information [e.g., a routing table], based on the target address information, a third network node [e.g., target or third forwarding network node] of the wireless ad-hoc network, wherein the network node is configured to transmit the one or more chunks or a further processed version thereof to the third network node via a second point-to-point connection.

In embodiments, the third network node is a target network node indicated by the target address information.

In embodiments, the third network node is part of a multi-hop path [or chain] along one or more further network nodes via point-to-point connections to the target network node.

For example, the third network node can be in direct communication range to the target network node or in indirect communication range via one or more further network nodes to the target network node.

In embodiments, the first network node is configured to establish the first point-to-point connection to the second network node by receiving a first connection request message from the second network node and transmitting a first connection accept message to the second network node.

In embodiments, the first network node is configured to establish the second point-to-point connection to the third network node by transmitting a second connection request message to the third network node and receiving a second connection accept message from the third network node.

In embodiments, the first network node is configured, in a receiving mode [or receiving role], to receive the one or more chunks of the data package via the first point-to-point connection from the second network node, wherein the first network node is configured, after receiving the one or more chunks of the data package, to switch from the receiving mode into a sending mode [or sending role], wherein the first network node is configured, in the sending mode, to transmit the one or more chunks of the data package via the second point-to-point connection to the third network node.

In embodiments, the first network node is configured, in a maintainer mode [or maintainer role], to receive advertisements and to update the routing information based on the advertisements.

In embodiments, the first network node is configured, in the maintainer mode [or maintainer role], to transmit an advertisement [e.g., one or more advertisements].

For example, the maintainer mode can be a default mode, where the first network node can be configured to switch into another mode (e.g., receiving mode or streamer mode) in response a reception of a connection request message.

In embodiments, the first network node is configured, in a streamer mode, to receive the one or more chunks via the first point-to-point connection from the second network node using a first radio unit and to concurrently [or simultaneously] transmit already received chunks of the one or more chunks via the second point-to-point connection to the third network node using a second radio unit.

In embodiments, the first network node is configured to prioritize the streamer mode in which the first radio unit and the second radio unit are used concurrently over another mode in which the first radio unit and the second radio unit are used non-concurrently [e.g., receiver mode or transmitter mode].

In embodiments, the first network node and at least one out of the second network node and the third network node are functionally similar or identical devices.

In embodiments, the routing information allows the first network node to select the third network node out of a plurality of network nodes of the wireless ad-hoc network based on a local path decision mechanism.

In embodiments, the first network node is implemented to operate based on one of the following protocols:
- Bluetooth [e.g., Bluetooth Low Energy],
- Meshmerize,
- BATMAN,
- Randle.

In embodiments, the first network node is configured to receive from a second network node [e.g., origin or second forwarding network node] of the wireless ad-hoc network one or more chunks [e.g., (different) parts or segments or slices] of a data package via a first point-to-point connection, wherein the one or more chunks comprise a target address information describing a target address of the data package [e.g., the target address specifying a target network node], wherein the first network node is configured to determine whether the first network node is addressed by the target address, wherein in case the first network node is addressed by the target address, the first network node is configured to, after receiving a required number of chunks of the data package [e.g., all chunks or a proper subset of chunks required for reassembling the data package based on an error correction code], to combine the chunks in order to obtain the data package, wherein in case the first network node is not addressed by the target address, the first network node is configured to select using a routing information [e.g., a routing table], based on the target address information, a third network node [e.g., target or third forwarding network node] of the wireless ad-hoc network and to transmit the one or more chunks or a further processed version thereof to the third network node via a second point-to-point connection.

In embodiments, the first network node is configured to provide the data package to an application.

Further embodiments provide a method for operating a first network node [e.g., forwarding network node] for a wireless ad-hoc network. The method comprises a step of receiving from a second network node [e.g., origin or second forwarding network node] of the wireless ad-hoc network one or more chunks [e.g., (different) parts] of a data package via a first point-to-point connection, wherein the one or more chunks comprise a target address information describing a target address of the data package [e.g., the target address specifying a target network node]. Further, the method comprises a step of selecting fusing a routing information, based on the target address information, a third network node [e.g., target or third forwarding network node] of the wireless ad-hoc network. Further, the method comprises a step of transmitting the one or more chunks or a further processed version thereof to the third network node via a second point-to-point connection.

Further embodiments provide a method for operating a first network node for a wireless ad-hoc network. The method comprises a step of receiving from a second network node [e.g., origin or second forwarding network node] of the wireless ad-hoc network one or more chunks [e.g., (different) parts or segments or slices] of a data package via a first point-to-point connection, wherein the one or more chunks comprise a target address information describing a target address of the data package [e.g., the target address specifying a target network node]. Further, the method comprises a step of determining whether the first network node is addressed by the target address, wherein, in case the first network node is addressed by the target address, the chunks are combined by the first network node in order to obtain the data package after receiving a required number of chunks of the data package [e.g., all chunks or a proper subset of chunks required for reassembling the data package based on an error correction code], wherein in case the first network node is not addressed by the target address, a third network node [e.g., target or third forwarding network node] of the wireless ad-hoc network is selected using a routing information [e.g., a routing table], based on the target address information, and the one or more chunks or a further processed version thereof are transmitted to the third network node via a second point-to-point connection.

Embodiments provide a wireless ad-hoc network, wherein in the wireless ad-hoc network one or more chunks of a data package are transmitted from an origin network node to a target network node using a multi-hop path along a plurality of network nodes via point-to-point connections, wherein along the multi-hop path, a subsequent network node of the plurality of network nodes is selected by a preceding network node of the plurality of network nodes using a routing information and based on a target address information contained in the one or more chunks, the target address information describing a target address of the data package.

Further embodiments provide a method for transmitting a data package in a wireless ad-hoc network. The method comprises a step of transmitting one or more chunks of a data package from an origin network node to a target network node using a multi-hop path of point-to-point connections between a plurality of network nodes, wherein along the multi-hop path, a subsequent network node of the plurality of network nodes is selected by a preceding network node of the plurality of network nodes from a routing table based on a target address information contained in the one or more chunks, the target address information describing a target address of the data package.

In embodiments, a functional core can be core functionality independent of specific hardware availability.

In embodiments, a data package can be a consistent unit of data (e.g., an image).

In embodiments, a chunk can be a segment/subset/slice of a data package combined with meta information.

In embodiments, a forwarder can be a network node that relays data packages but is neither the origin nor the target.

In embodiments, a streamer can be a forwarder capable of maintaining simultaneous connections to two other network nodes.

In embodiments, an in-queue can be a buffer for incoming data packages.

In embodiments, an out-queue can be a buffer for outgoing data packages.

In embodiments, an application can be an user-facing software interacting with the network.

In embodiments, a transmission can be the complete process of propagating a data package from origin to target.

Embodiments provide a network node, or network device (ND), that is designed to be used in a network cluster of multiple such devices. In embodiments, the collective ensemble of multiple NDs is able to automatically establish and maintain an ad-hoc network cluster (ANC) in a self-organized, local and decentralized manner. The network cluster ensures robust and reliable wireless communication, even in volatile environments.

In embodiments, the ND can be equipped with a routing mechanism that enables efficient routed multi-hop point-to-point data transmission in the ANC, which blends into the self-organizing architecture and is technically realized via single or multiple radio tunnels. Broadly, this allows the devices to communicate with one another, even when they are not within direct range. Furthermore, the ANC ensures that even if one or more nodes fail or leave (volatile network), the system as a whole can continue to operate, rerouting transmissions as needed. Conversely, the system is designed to automatically adjust when new nodes join, seamlessly integrating them into the ANC. For brevity, herein the terms network device (ND) or network node are used to describe one single unit and ANC to describe an ensemble of such devices which form an ad-hoc network cluster.

In an ANC, all units can be equivalent, with no distinction in the their functional core, i.e. with respect to the ad-hoc network infrastructure and communication. In particular, there is no distinction among nodes in an ANC in terms of their network-level operational scope. Device are not statically assigned to roles, such as Sender, Receiver, or Forwarder, but can dynamically switch between roles as needed at runtime. Consequently, the ANC, composed of multiple NDs, does not require central units, such as cluster heads or base stations.

In embodiments, data packages are divided into chunks. This chunk-based approach not only improves compatibility with memory-constrained forwarding devices but also enhances flexibility and reliability in data handling. Chunks are manageable units that can be efficiently transmitted and stored, ensuring that nodes with limited re-sources can participate in the network. Even if data chunks arrive out of order at the target and through possibly different routes, they can be correctly be reassembled.

In embodiments, an ANC can include both NDs with one or multiple radio units. In case a single-radio unit assumes the role of a package forwarder, a store-forward approach is employed. In case at least two radio units are available, those radios can assume roles independently and are priorized to create a streaming pair (i.e. a combination of receiver and sender). By equipping NDs with multiple radios to stream data and establishing simultaneous connections with both the previous and next hops, embodiments eliminate the need for significant intermediate storage resources. This approach substantially improves data rates and reduces latency, which is particularly beneficial for applications requiring real-time data transmissions.

Subsequently, embodiments of the present invention are described in further detail.

Thereby, by way of example, a table-driven proactive routing protocol is assumed, such as described above with respect to Randle. This particular realization, however, is not a strict requirement of embodiments, and also other routing mechanisms can be used, such as reactive protocols, where routes are established on-demand.

### 1. Node Uniformity

Embodiments provide a network device intended for integration into an ad-hoc network cluster (ANC) of devices with identical functional core. The cluster is based on a decentralized, self-organizing architecture, where each node possesses uniform capabilities and responsibilities with respect to the network infrastructure and communication. This allows to establish a network cluster without requiring any hierarchical structure of devices or specialized infrastructure, such as base stations or designated server. By eliminating the need for specialized nodes, the ANC is automatically highly scalable, allowing the network to adapt seamlessly as new nodes join or leave. Locally, each node has routing information available such that outbound data transmission over multiple other nodes can be initiated.

In embodiments, the routing mechanism can be driven by a proactive, table-driven routing protocol, such as described above with respect to Randle. In embodiments, each node can store a look-up-table (LUT) of suitable next hops for every known target node in the ANC. The LUT is dynamically built and updated as advertising messages, periodically broadcasted from all nodes in the ANC, are received. Advertisements propagate through multiple nodes in the ANC as they will also be reflected towards all locally next hops upon arrival.

### 2. Packages and Chunks

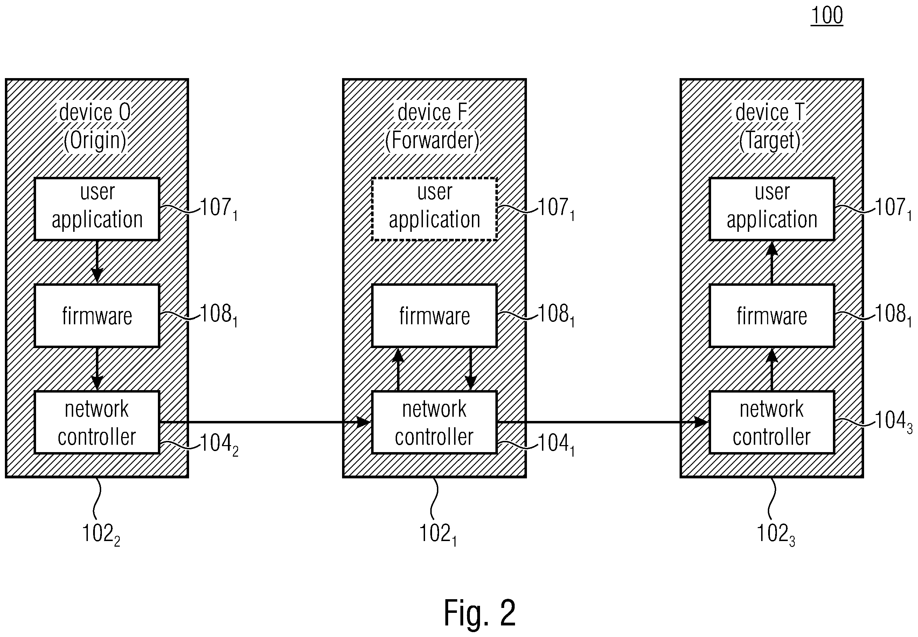

Fig. 2 shows a schematic representation of a high-level data flow in a wireless ad-hoc network, where in Fig. 2, by way of example, three network nodes (or network devices) 102₁, 102₂, 102₃ are shown. Broadly, each network node 102₁, 102₂, 102₃ can comprise an user application 107₁, 107₂, 107₃, a firmware 108₁, 108₂, 108₃ or additional software layer extending the network controllers capabilities, which can implement the embodiments described herein, and the actual network controller hardware 103₁, 103₂, 103₃ (such as the Bluetooth radio). Thereby, the network controller 103₁, 103₂, 103₃ can comprise a network interface and a processor (cf. Fig. 1).

As shown in Fig. 2 by way of example, the first network node 102₁ can be a forwarding network node, where the second network node 102₂ can be an origin network node and where the third network node 102₃ can be a target network node.

In embodiments, data transmission within the network cluster can originate from an arbitrary software application. On the sending side, as detailed in Fig. 2, this application creates data units referred to as packages, which encapsulate the payload data intended for communication between nodes. The ANC adds essential metadata to each package, such as the source and target node identifiers, which are also provided by the external application. Additional information can optionally be included, such as priority levels for traffic management in the ANC, separation identifiers for distinguishing between multiple external applications, timeout specifications, or acknowledgment requirements.

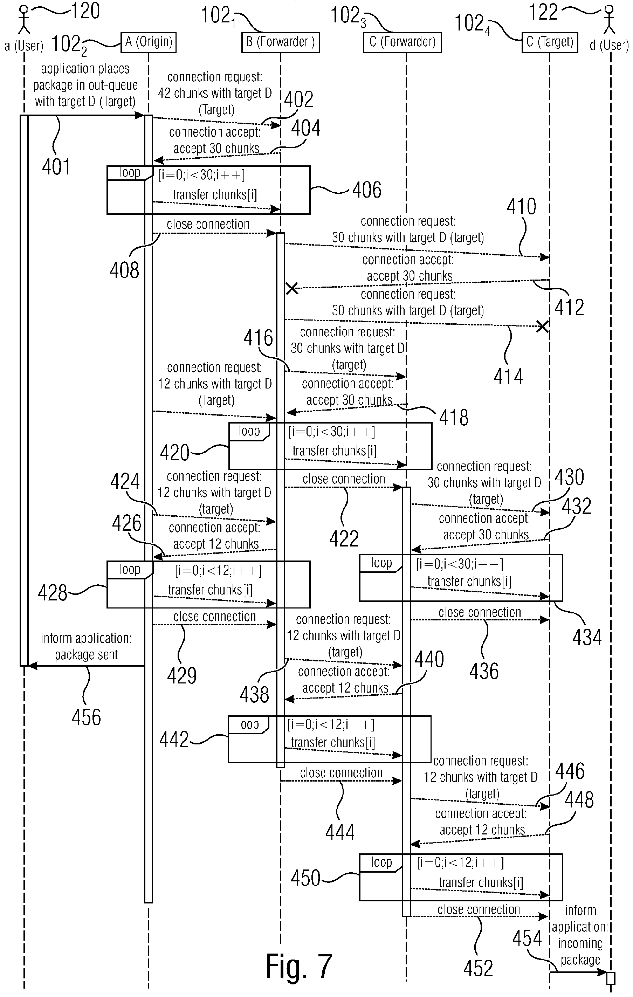

In embodiments, the ANC supports concurrent handling of multiple packages through pipelining. This is achieved by dividing the packages into smaller units called chunks. The finer granularity introduced by chunking enables the network cluster to manage multiple data streams simultaneously (see Fig. 7) while individual nodes can perform maintenance operations between transmission of chunks when the radio is unoccupied. Furthermore, forwarding nodes (cf. Fig. 2) are not required to cache the entire data package. Chunks inherit the original package's metadata, are assigned a unique package identifier and a sequence number that specifies the chunk's position within the package.

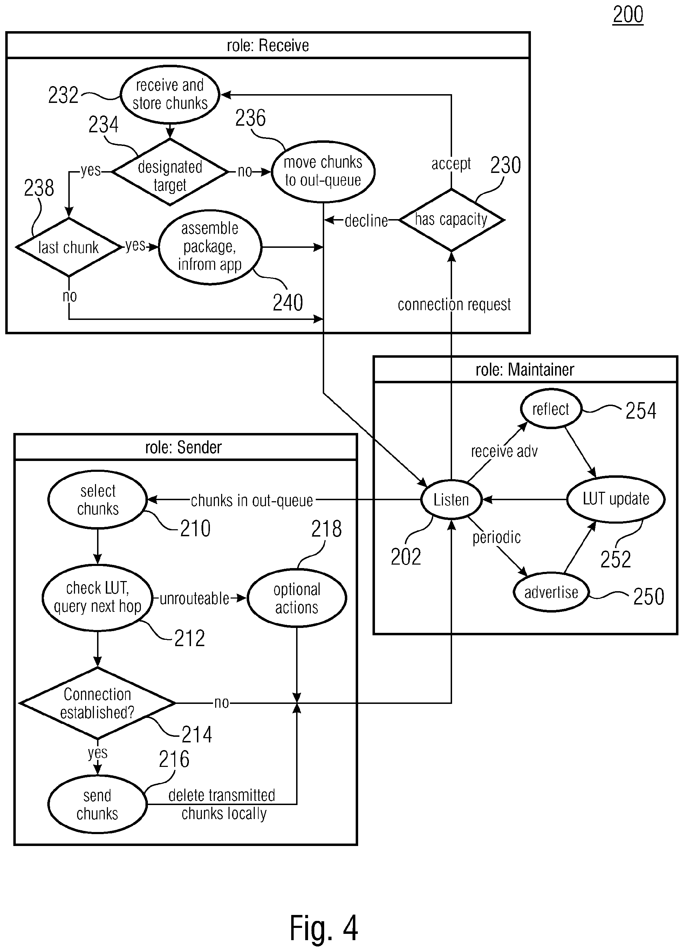

In embodiments, chunking can be implemented using a fixed-size segmentation approach. The chunk size as well as the maximum number of chunks per data transmission is a global system default parameter. Each chunk is assigned a unique sequence number to ensure proper reassembly at the receiving node. Alternatively, an adaptive chunking mechanism can be employed, where chunk size is dynamically adjusted based on factors such as network congestion, payload characteristics, or priority levels, optimizing transmission efficiency and reducing latency in high-traffic scenarios. In this embodiment, the device will return to the Listen state after a series of chunks has successfully been sent or received, as detailed in Fig. 4. This allows to steadily send or receive LUT updates through advertising messages in a non-blocking manner.

### 3. Node Roles

In embodiments, in the ANC, every device provides uniform capabilities and responsibilities. The distinction between, e.g. an Origin Node, Forwarding Node, or Target Node is not inherent to the node itself but is determined dynamically based on its role in the current transmission. This temporary role assignment allows nodes to function interchangeably. For clarity, herein letters are used to refer to temporarily assumed roles of network nodes. These are explained in Table 2.

Specifically, the following Table T describes the nomenclature used herein. Symbols used for node roles herein, including whether they are used at package level, chunk level, and minimum number of radios required to assume the role.

**Table 2**

| **Symbo l** | **Role** | **package level** | **chunk level** | **min radios** |
|---|---|---|---|---|
| *O* | origin network device | X | | 1 |
| *T* | target network device | X | | 1 |
| *F, Fᵢ* | forwarding network device(s) | X | | 1 |
| *S* | sender network device | | X | 1 |
| *R* | receiving network device | | X | 1 |
| *M* | maintaining network device | | X | 1 |
| *V*, *Vᵢ* | streaming network device(s) | | X | 2 |

As a data package transmission, initiated by the application on one ND and aimed to be received by another ND, may require multiple NDs to be involved in the routing process, it is worthwhile to distinguish between roles on the application or package point of view and on the chunk level, the latter resolving the individual sub-transmissions between NDs, if applicable.

From the application or full data package point of view, the origin node of one package transmission process is labeled herein as *O*, the target node as *T,* and forwarding nodes, if present, as *Fᵢ*. To be even more specific, as those roles are assumed with respect to specific data packages, herein it is written *O*(*pₐ)* if, e.g., particular distinction is required between two different packages *pₐ* and *p_{b}.* A given node *X* can, by way of example, dynamically switch between origin roles for one package, *X = O*(*pₐ*)*,* and target or forwarding role for another package, *X = F*(*p_{b}*)*,* if required by the current transmission demands within in the ANC.

Since, in embodiments, data chunks are sequentially routed from node to node via point-to-point connections, herein it is referred - at this level of granularity - to the sender of a sequence of chunks as *S* and to the receiver as R. In other words, this notation is employed whenever a single chunk-level transmission sub-process is described. Finally, the role Maintainer *M* is used to denote a node that is neither sending nor receiving, as it is responsible for maintaining and updating the ANC.

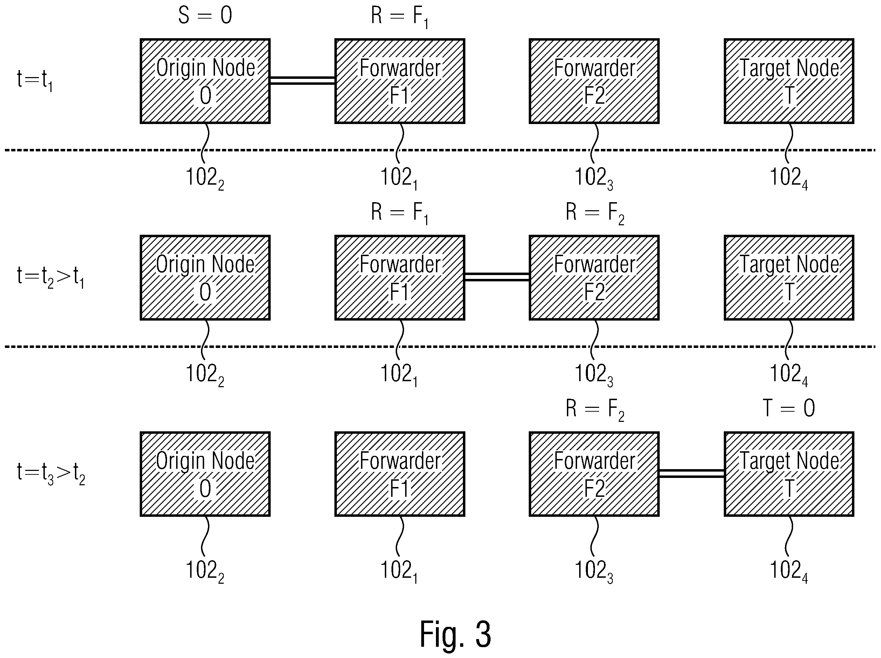

The nomenclature is illustrated in Fig. 3. Specifically, Fig. 3 shows a schematic representation of transmissions between network nodes 102₁, 102₂, 102₃, 102₄ of a wireless ad-hoc network at different time instants. At a first time instant (t = t₁), transmission takes place between a second node 102₂ as origin node and a first node 102₁ as forwarder node. At a second time instant (t = t₂ > t₁), transmission takes place between the first node 102₁ as forwarder node and a third node 102₃ as forwarder node. At a third time instant (t = t₃ > t₂), transmission takes place between the third node 102₃ as forwarder node and a fourth node 102₄ as target node. In other words, Fig. 3 illustrates a transmission process from an origin node *O* to a target node *T,* which passes through two forwarding nodes, *F*₁ and *F*₂. During each step of the forwarding process (compare time signatures *ti*), the participating nodes dynamically assume the roles of Sender *S* and Receiver *R* as one or several chunks of the data package are transmitted. Nodes, which are not involved in the transmission process, naturally assume the Maintainer role (omitted in the Fig. 3).

Hereby it is assumed that single-radio nodes (i.e., devices with only a single radio unit) can assume only one role at a time. By way of example, and without limiting the scope of embodiments with single-radio, the following discussion focuses on such nodes. Devices equipped with two or more radio units can assume multiple roles simultaneously and are addressed in Section 5.

In the following, an ANC consisting of multiple NDs is considered, where a data package is to be transmitted between two NDs, the origin node and target node.

### 3.1 Origin Node

In embodiments, the origin node 0 is the source of the data package generated by a (user) application running on or connected to that node, as depicted in Fig. 2. For example, the application can interact with the ad-hoc network layer through an interface. It can include functions to retrieve information about the current network status, such as the list of nodes currently available or their resource capacities.

In embodiments, when the application initiates a data transmission using the given interface, the target node identifier can be included, as well as further (optional) arguments, such as e.g. unique package identifiers, priority levels or error-checking requests. This way it can be ensured that the data can be correctly routed through the network and accurately reconstructed at the target node. The data package, augmented with meta-information by the ANC, can be divided into chunks according to the chunking process described in Section 2. These chunks can be placed into the sending node's out-queue awaiting transmission. If provided by the application, priority levels included in the chunk meta data can be used to determine transmission order.

In one embodiment, the out-queue can be realized as a First-In, First-Out (FIFO) buffer. Each chunk is optionally associated with an additional integer value, encoding the sending priority. The priority values are used to overwrite the order of transmission.

In embodiments, the process of adding meta data, chunking, and enqueuing is independent of the radio's current state and can proceed in parallel with ongoing radio operations. As any node continuously monitors its out-queue, the origin node becomes aware of packages in its out-queue and handles them as detailed in the state machine (Fig. 4). Upon successful reception of the data chunks the receiving node (which is either a Forwarder or the Target) returns an acknowledgment. As soon as acknowledgments for all chunks of a package have been captured, the application receives a confirmation indicating that the data has been transmitted successfully. In the event of an error, such as a timeout, repeated transmission failures, or an unresponsive destination, the application can be notified of the transmission failure.

In embodiments, Bluetooth low energy (BLE) can be used for data transmission. As, in this case, connections are always bidirectional, the receiving node may send an acknowledgment before the connection is closed. Alternatively, a fixed time window can be used to detect a timeout. If the origin node does not receive an acknowledgment within this window, the current connection can be closed and retransmission is initiated by establishing a new connection with the receiving node. After a specified number of retries, all chunks of the corresponding package are removed from the out-queue and the application is notified of the transmission failure.

### 3.2 Forwarding Node

Forwarding nodes enable data packages to traverse through multiple hops on their path from the origin node to the target node. Their role is essential when the source and destination nodes are not within direct communication range. The forwarding node temporarily assumes this role based on its position within the network topology during the current transmission session.

In the following, a data package is considered that is issued for transmission by an origin node *O* and destined for a target node *T,* located beyond the origin nodes *O* immediate communication range. In this case, the origin node *O* queries its local routing table in order to find a suitable forwarding node *F*₁ (also referred to as next hop) and requests a connection. If the forwarding node *F*₁ accepts the connection (*R* = *F*₁), it will first inform the sender *(S* = *O)* about how many chunks it is ready to receive. The corresponding number of chunks is then transmitted sequentially and the connection is closed. Both devices (origin node *O* and forwarding node *F*₁) return to the Listen state (cf. Fig. 4), which allows them to send advertisements and update their LUTs before being available for new connections (either outbound or inbound). Now the formerly forwarding node *F*₁ takes on the role of the sender (*S = F*₁) and requests a connection to the next hop (given by its local LUT), which in the example of Fig. 3 is forwarding node *F*₂ and the process is repeated.

In embodiments, in case the connection is disrupted during transmission both nodes can return to the Listen state. Both can perform advertisements and LUT updates and current S reinitiates the sending process for those chunks still in its out-queue. After the LUT update, routes to the Target node may have changed, leading to routing over possibly different Forwarder nodes.

In case a designated receiving node R cannot accept the transmission, due to, e.g., resource constraints or being radio busy, it will ignore the connection request, prompting S to select an alternative routing path.

In one embodiment, similar to Section 3.1, Bluetooth low energy (BLE) can be used for data transmission. As, in this case, connections are always bidirectional, for every step in the sequence of transmissions, the receiving node *R* sends an acknowledgment to the Sender *S* before the connection is closed.

In another embodiment, incoming package chunks are first stored in the in-queue and subsequently moved to the out-queue if the current node is not the target node. In this embodiment, the out-queue references the same data as the in-queue, e.g. by using pointers, in order to avoid additional memory allocations.

### 3.3 Target Node

In embodiments, the target node T is the intended recipient of the data package. As chunks from possibly different packages are received, the target node accumulates them in its in-queue. The target node can use the chunk metadata to verify that it is in fact the designated target. In case a different node is the target, the target node becomes forwarding node for that particular package (compare Section 3.2).

As chunks may arrive out of order due to network variability and asynchronous transmission, the target node monitors the in-queue in order to detect when all chunks of a package have been received. Once all chunks are present, the target node T proceeds to reconstruct the original data package and delivers the payload to the (user) application. The target node has an adequate storage capacity, either volatile or non-volatile, to store the complete data package for reassembly.

In one embodiment, integrity verification methods, such as a checksums or hash functions, can be employed to ensure that the data is intact and uncorrupted. If the data passes these integrity checks, it is handed off to the appropriate external application for processing. In this embodiment, if the node detects missing or corrupted chunks, indicated by gaps in sequence numbers or failed integrity checks, it initiates error handling procedures. The node requests retransmission of specific missing chunks from the origin node using an appropriate acknowledgment mechanism.

### 4. Single-radio State Machine

Having elaborated on the principal roles in a multi-hop transmission process, subsequently the detailed state machine of a single-radio node is described. The state machine 200 is illustrated in Fig. 4 and revolves around the Listen state 202, which serves as its central hub. Specifically, Fig. 4 shows a schematic representation of the state machine 200 of a single-radio unit (i.e. network node with a single radio unit), which can assume the roles of Sender *S,* Receiver *R,* and Maintainer *M,* as discussed in Section 3. The state *optional actions* depends on the implementation and may contain substates (compare text). In embodiments with two or more radio units, the state machine may be traversed by each radio unit independently.

After completing an incoming or outgoing transmission of a series of data chunks (regardless of whether the transmission was successful), the node returns to the Listen state 202 and performs at least one cycle of ANC maintenance. This maintenance involves sending advertisements and waiting for a predefined period to receive advertisements from other ND's and update the local lookup table (LUT).

The maintainer role is exited for two reasons:
- An incoming connection request prompts the node to transition into the receiver role.
- A regular check reveals one or more pending data chunks in the node's local out-queue, prompting a transition to the sender role. These chunks may either originate from the node's application (in which case the node acts as the origin 0 of that transmission) or result from previous transmissions forwarded by the node (rendering it a forwarder *Fᵢ*).

### 4.1 Sending Role

Upon detecting pending data chunks, the network node assumes the role of the sending node and transitions form the Listen state 202 to state 210. In state 210, the sending node S selects chunks. The sending node S waits for the radio to become available. It then extracts the target node identifier from the chunk header. Using the local routing table, in state 210, the node selects the optimal next-hop node towards the target, based on the currently known ANC topology. Subsequently, in state 214, it initiates a connection with the chosen next-hop node (which assumes the receiver role *R),* providing relevant transmission parameters, such as the number of chunks to be transmitted, along with optional arguments, such as the chunk size.

In one embodiment, where the Bluetooth Low Energy (BLE) protocol is used, the connection request is initiated via advertisements (see Section 3.3). Once the connection is established, transmission parameters can be exchanged seamlessly due to the bidirectional nature of the connection.

If the connection is established successfully, the sending node sends the chunks in state 216. After the transmission of the chunks is completed, the transmitted chunks are locally deleted and the node transitions to the Listen state 202.

There are mainly three reasons why a data transmission can render unsuccessful.

First, no response. If no response is received after a connection request, the unresponsive node is removed from the local LUT and the sending node returns to the maintainer role (Listen state 202), allowing it to update the routing table with the latest ANC status. Since the out-queue is still occupied with data chunks, the sending role is invoked again after a defined waiting period, selecting a new next-hop node based on the updated routing table.

Second, connection interrupt. In case an established connection drops unexpectedly during data transmission, the sender returns to the Listen state 202 to allow the routing table to be updated. When the sending role resumes, the node reinitiates the transmission process, selecting a new optimal next-hop node based on the revised routing information.

Third, target unrouteable. If no path is known to reach the target node T, the sender *S* may execute optional actions in state 218 before returning to the Listen state. These actions are designed to prevent endless retries in such cases.

In one embodiment, the node spawns a retry counter that increments each time a transmission attempt fails due to an unrouteable path. After a predefined number of retries, the node discards the chunk and notifies the user application on the origin node 0 (if possible) of the transmission failure. This notification can be implemented using an appropriate acknowledgment mechanism. It is important to note that the target node *T* may still receive other chunks from the same package if they take alternative routes. However, because the unrouteable status of *T* caused the failure, it cannot be directly informed of the transmission failure. To address this, the embodiment includes a timeout mechanism on the target side. This mechanism discards all chunks of a package if the complete package is not received within a specified time after the arrival of the first chunk.

### 4.2 Receiving Role

While in the Listen state 210, a node that receives a connection request from another ND transitions to state 230 into the receiver role R. In state 230 the network node determines whether sufficient storage capacity is available and no other technical constraints are encountered. If sufficient storage capacity is available and no other technical constraints are encountered, the node accepts the connection and informs the sender *S* of the number of chunks it is prepared to receive and transitions to state 232. Otherwise, the network node declines the connection and returns to the Listen state 202.

In state 232 the chunks are received and buffered in the in-queue. Once stored, their header information is extracted to determine in step 234 whether the current node is the designated target *T* or an intermediate forwarder *Fi.* If the node is a forwarder, then node transitions to state 236 in which the corresponding chunks are transferred to the out-queue. The node subsequently returns to the Listen state 202, from which it is likely to assume the sending role soon, as data chunks are now present in the out-queue.

In contrast, if the package is identified as being targeted to the current node, the chunks are temporarily stored until the entire package has been received (state 238). Once all chunks are collected, the node reconstructs in state 240 the package and delivers it to the application while it transitions back to the Listen state 202.

### 4.3 Maintainer Role

As mentioned in Section 3, the Maintainer role M is responsible for maintaining the ANC, i.e. performing necessary actions such that, for example, routing information is brought up-to-date or can be readily updated when needed, depending on the routing protocol implementation. As detailed in the example state machine in Fig. 4, the Maintainer role comprises the Listen state 202, which can be seen as the central hub of the state machine. In particular, the Listen state 202 serves as the entry point for both incoming and outgoing data transmissions, i.e. role switches from *M* to *R and M* to *S,* respectively. For clarity, the scope of all three roles is highlighted in the state machine in Fig. 4.

In one embodiment, BLE can be used for communication. In this case, in state 250 the network node can send advertisements periodically to distribute routing and device information across the ANC. For example, if the ND is able to accept incoming connections, advertisements of type ADV_IND can be sent, which enable nearby NDs to initiate a connection. Otherwise, ADV_NOCONN can be used as described in Section 3. While not advertising, NDs will use passive scanning to listen for advertisements from other NDs, which update the LUT in state 252 and may be reflected (retransmitted) in state 254 via ADV_IND or ADV_NOCONN, respectively.

In another embodiment, also BLE can be used for communication, and the maintaining role is implemented using the RANDLE framework, discussed in Section 4. Here, the maintainer role, allows the node to receive and reflect advertisements and update the local LUT. A maintainer node will also periodically send advertisements in order to make or keep other nodes in the ANC aware of its presence.

### 5. Multi-Radio Nodes

In Sections 3 and 4, the available roles for single-radio nodes were discussed. In this section, the discussion is extended to embodiments with multiple radio units. Formally, it is referred to an arbitrary node X equipped with *n* radio units as *X* ≡ (*X*₍₁₎*, X*₍₂₎*,* ... , *X*_{(*n*)})*.* The individual radio units X_{(*i*)} can be controlled independently, which means they can concurrently assume independent roles both on chunk-level X_{(*i*)} ∈ {*R, S, M*} and on package-level *X*(*i*) ∈ {*0, T, Fi*}. For example, in an embodiment with two radio units, one radio unit might be the origin of a transmission and sends data chunks to another ND, *X*₍₁₎ *= O*(*pₐ*)*,* whereas the other radio unit acts as Forwarder in the transmission chain of chunks from a different data package, X₍₂₎ = *F*(*p_{b}*)*.*

Nodes with two or more radio units have the unique capability to form pairs, enabling simultaneous connections to both neighboring nodes in a transmission chain. The role of such a pair of radio units is referred herein to a *Streamer V.*

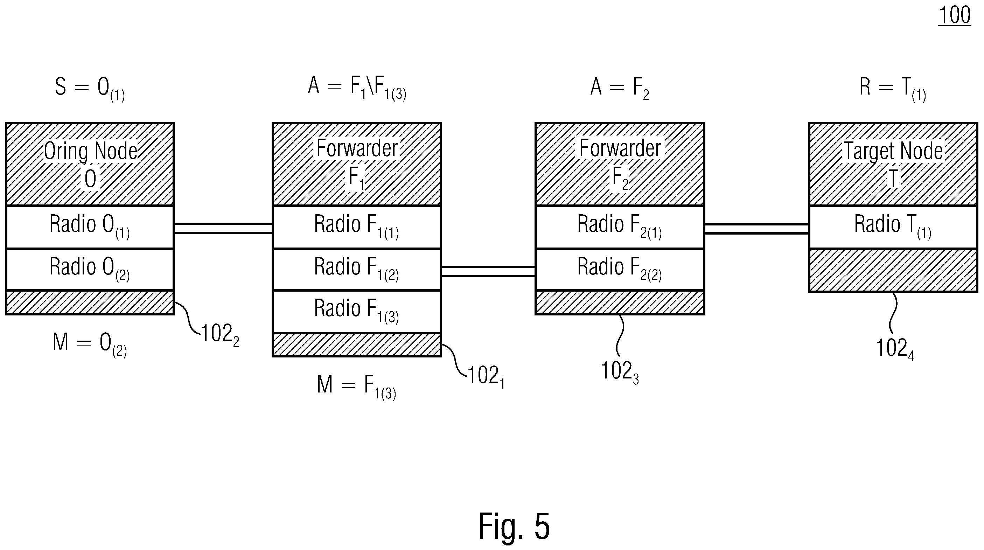

Subsequently, an embodiment with two radio unit *X*₍₁₎ and X₍₂₎, i.e. *X* ≡ (*X*₍₁₎*, X*_{(*2*)})*,* is considered. Node X becomes a Streamer (X *= V)* if, for a given data package *pk,* simultaneously, *X*₍₁₎ *= R*(*pₖ*) and *X*₍₂₎ *= S*(*pₖ*) or vice versa. The streaming role allows the node to receive data chunks from one radio interface and transmit them on the other radio without the need for large intermediate storage in either of its queues. Provided a sufficient number of devices which can act as streamers, a permanently active, routed, bidirectional connection can be established between 0 and *T,* as depicted in Fig. 5. Specifically, Fig. 5 shows a schematic representation of a transmission process between network nodes 102₁, 102₂, 102₃, 102₄ of a wireless ad-hoc network, at least some network nodes 102₁, 102₂, 102₃, 1024 of the which having network controllers with two or more radio units. In the example of Fig. 5, the first network node 102, and the third network node 102₃ are acting as forwarding network nodes *F*1 and *F*2, where the second network node 102₂ acts as origin network node O, and where the fourth network node 102₄ acts as target network node T. Origin network node O comprises two radio units Radio O₍₁₎ and Radio O₍₂₎, where forwarder network node F₁ comprises three radio units Radio F₁₍₁₎, Radio F₁₍₂₎ and Radio F₁₍₃₎, where forwarder network node F₂ comprises two radio units Radio F₂₍₁₎ and Radio F₂₍₂₎, and where target network node T comprises radio unit Radio T₍₁₎. As both forwarders *F*₁ and *F*₂ are equipped with multiple radio units, they can act as streamers and simultaneously hold connections to both neighboring nodes in the current transmission chain (i.e. forwarder *F*₁ using radio units F₁₍₁₎ and F₁₍₂₎; and forwarder *F*₂ using radio units F₂₍₁₎ and F₂₍₂₎. In this example, radio units *O*₍₂₎ and *F*₁₍₃₎ are not part of the transmission process and hence (by default behavior) assume the Maintainer role until, e.g., a second transmission is requested.

This is obviously beneficial compared to single-radio scenarios, as it avoids the need for intermediate storage and repeated connections setups, leading to substantial improvements in data rates and latency.

Embodiments equipped with more than two radio units offer even greater flexibility, enabling them to handle more complex scenarios. For instance, they can simultaneously maintain connections to multiple other nodes, serve as a (temporary) hub in the ANC, or operate in diverse roles concurrently, even built multiple streaming pairs in case at least four radio units are available.

Having refined the transmission roles to a level of individual radio units in this section, it is clear that an ANC can comprise a heterogeneous mix of both single and multi-radio devices without requiring additional adjustments. Embodiments of either kind can be seamlessly integrated into the ANC and individual package transmission chains can feature both single and multi-radio nodes.

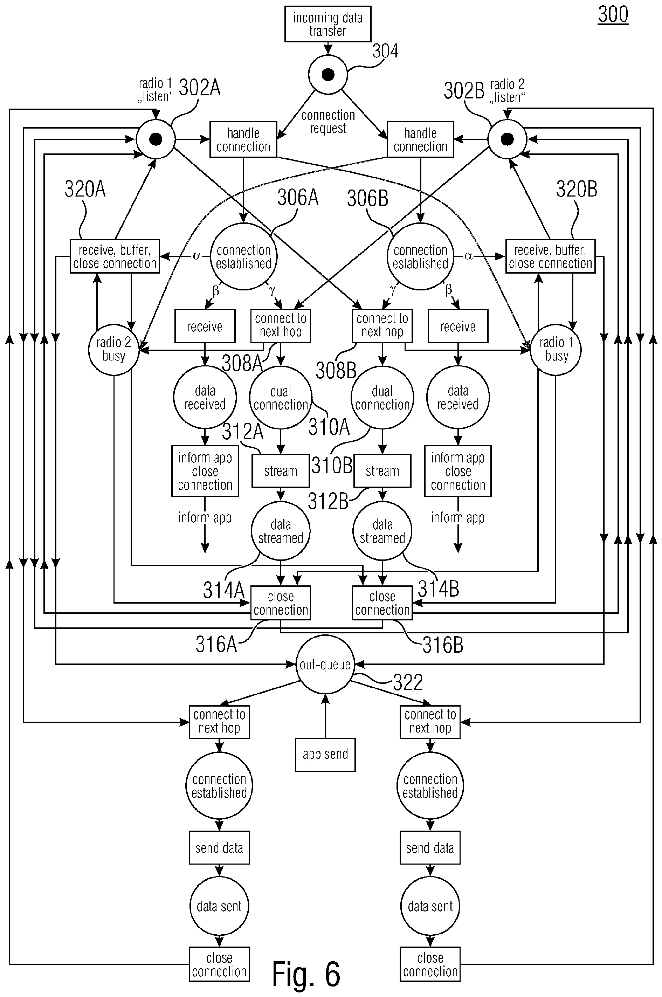

For an embodiment equipped with two or more radio units, it is useful to priorize the streaming role against the traditional forwarder role (cf. Section 3.2), due to the benefits mentioned above. In Fig. 6, a simplified Petri net is shown to illustrate the internal operations of a network node with two radio units by way of example.

Specifically, Fig. 6 shows a simplified Petri net describing the behavior of an network node equipped with two radio units, handling incoming data transfers based on the state of both radio units. In the scenario of Fig. 6, the network node prioritizes assuming the streaming role, as detailed in Section 5. Greek letters *α, β,* y are used to incorporate logical decisions which are uncommon in Petri nets and are explained below.

A Petri net is a mathematical modeling tool used to represent and analyze systems that involve concurrent, parallel, or asynchronous events. It consists of places (circles), transitions (rectangles), and arcs (arrows), where places represent conditions, transitions represent events, and arcs define the flow of tokens (black dots) between places and transitions. Tokens represent the state or condition of a system and can, broadly, be seen as resources.

Analogously to the state machine, Fig. 6 revolves around the Listen states 302A, 302B of two radio units and provides insight into how the node dynamically adapts its behavior based on the availability of resources, particularly the state of its two radio units. Given a connection request (white circle with black dot) 304, a radio in Listen state is required as an additional resource in order to handle the connection and traverse to the Connection Established place 306A, 306B, which is, as a result, then equipped with a token.

If the network node identifies itself as the target node (path *β*), the application is informed after successful data reception.

Only if the packet needs to be forwarded and a further radio is available as a resource (path *γ*), the network node assumes the streaming role and therefore connects to the next hop 308A, 308B, followed by a series of places and transitions 310A-314A, 310B-314VB representing the actual realization of the streaming process. Broadly speaking, once the first connection is established, the node acquires a further radio for establishing the second connection, ensuring both connections in the transmission chain are active. Eventually the connection is closed 316A, 316B and the corresponding radio resources are returning into Listen state 302A, 302B.

If there are no further radios available (path *α*), the network node assumes the forwarder role and therefore receives and buffers incoming data before closing the connection 320A, 320B and places data payload in the Out-Queue 322. From there on the sending routine described earlier (see Section 4.1) is executed, which is shown in the lower part of Fig. 6.

### 6. Detailed Examples

The processes within an ANC can be displayed using sequence diagrams, which illustrate the interactions between different entities over time. In these diagrams, the vertical axis represents time, showing the progression of events, while the horizontal axis displays the different entities involved, with messages or signals depicted as arrows between these entities.

### 6.1 Single-Radio

In Fig. 7, an example of data transmission from origin node 0 *= A* to target node *T = D over* two Forwarders (*F*₁ *= B and F*₂ = *C*) is described, where all nodes are equipped with a single radio unit. The diagram is simplified, as detailed subprocesses (such as chunking, acknowledgments, etc.), as well as the Maintainer role, are omitted, for clarity.

Specifically, Fig. 7 shows a sequence diagram of a data transfer between network nodes of a wireless ad-hoc network, each of the network nodes using a single radio. Thereby, in Fig. 7 a simplified data transfer is displayed from one nodes application to another. The ANC takes care of the transport across several hops including efficient pipelining and delivers the data to the application of the target node.

The process is started by the application user *a* 120, who initiates the data sending by placing 401 a package in the out-queue with the target set as network node *D* 102₄ (of application user d 122) via the application interface to the ANC. Network node *A* 102₂ recognizes data payload in its local out-queue, adds corresponding metadata, separates the data into 42 chunks and initiates the sending routine. Then network node *A* 102₂ determines the route to network node *D* 102₄, meaning that it identifies network node *B* 102, as the best next hop.

Network node *A* 102₂, acting as the origin, requests a connection to transmit all 42 chunks to network node *B* 102, (e.g., by transmitting a connection request 402 comprising a target address specifying network node *D* 102₄ as target and indicating that 42 chunks are to be transmitted). However, due to a hardware limitation (such as buffer size), network node B 102₁ can only accept 30 chunks at a time. Consequently, network node B 102, accepts the first 30 chunks (e.g., by transmitting a connection accept 404 for 30 chunks), and the data transfer 406 begins. Chunks are sent sequentially after each other until the number which the two nodes agreed upon successfully sent. The underlaying communication technology (e.g., BLE) is responsible for reliable delivery of the chunks, possible retransmissions and informs about transmission errors (e.g., when nodes are moving out of range). Therefore, network node *A* 102₂ is aware of successfully transmitted chunks for removing them from its local out-queue. Once the first batch is sent, the connection is closed 408, network node *A* 102₂ waits an estimated time for network node *B* 102, sending the 30 chunks to the next hop. Then network node *A* 102₂ requests to send the remaining 12 chunks to network node *B* 102, (e.g., by transmitting a connection request 402 comprising a target address specifying network node *D* 102₄ as target and indicating that 30 chunks are to be transmitted). During this process network node B 102₁ is busy and therefore can not accept other connections.

Network node *B* 102₁, running the same procedure as all other nodes, receives 30 chunks and identifies these are targeted to network node *D* 102₄. As in the step before, routing lookup is performed, where network node *B* 102₁ determines the route to network node *D* 102₄ and identifies network node *D* 102₄ is directly available for point-to-point connection. Network node *B* 102, requests a connection to network node *D* 102₄ to send 30 chunks (e.g., by transmitting a connection request 410 comprising a target address specifying network node *D* 102₄ as target). Network node *D* 102₄ accepts the request, but the handshake process can not be completed, since network node *B* 102₁ does not receive the acceptance message 412 (e.g., due signal obstruction or movement out of range). Network node *B* 102₁ retries the connection request 414, which is not received by network node *D* 102₄, leading network node *B* 102, updating the local routing table (done in Maintainer Role, see Section 4.3). Finally, network node *B* 102, reinitiates the sending procedure and now identifies network node *C* 102₃ as the next hop to network node *D* 102₄.

Then network node B 102, requests a connection to network node C 102₃ to send the 30 chunks (e.g., by transmitting a connection request 416 comprising a target address specifying network node *D* 102₄ as target). Network node C 102₃ accepts the request by transmitting a connection accept 418 and the data transfer 420 begins.

The data transfer is completed successfully and thus closed 422 and network node *B* 102₁ is now able to receive the remaining 12 chunks from network node *A* 102₂. Therefore, network node A 102₂ requests a connection to network node B 102₁ to send the remaining 12 chunks (e.g., by transmitting a connection request 424 comprising a target address specifying network node *D* 102₄ as target and indicating that 12 chunks are to be transmitted). Network node *B* 102, accepts the request by transmitting a connection accept 426 and the data transfer 428 is performed, where the connection is closed 429 after the data transfer.

Concurrently, network node *C* 102₃ sends the formerly received 30 chunks to network node *D* 102₄ (after performing the same steps that have been described before, i.e. by transmitting a connection request 430 comprising a target address specifying network node *D* 102₄ as target and indicating that 30 chunks are to be transmitted, transmitting a connection accept 432, performing the data transfer 434, and closing the connection 436 after the data transfer). This highlights the ability of the ANC to enable pipelining for efficient data transmission, even with nodes comprising only a single radio unit.

Then, node *B* 102, requests a connection to network node *C* 102₃ to send the remaining 12 chunks (e.g., by transmitting a connection request 438 comprising a target address specifying network node *D* 102₄ as target and indicating that 12 chunks are to be transmitted). Network node *C* 102₃ accepts the request by transmitting a connection accept 440 and the data transfer 442 is performed, where the connection is closed 444 after the data transfer.

Afterwards, node C 102₃ requests a connection to network node *D* 102₄ to send the remaining 12 chunks (e.g., by transmitting a connection request 446 comprising a target address specifying network node *D* 102₄ as target and indicating that 12 chunks are to be transmitted). Network node *D* 102₄ accepts the request by transmitting a connection accept 448 and the data transfer 450 is performed, where the connection is closed 452 after the data transfer.

After successfully transmission of the data package split in to 42 chunks in two loops over the ANC from network node *A* 102₂ to network node *D* 102₄, network node *D* 102₄, being the target node, combines the chunks in order to reassemble the original data package while checking for completeness, e.g. through a checksum. Upon completion, network node *D* 102₄ informs 454 the receiving application user d that the package has been received. Similarly, network node *A* 102₂ notifies 456 user *a* that the package has been sent (but since no end-to-end acknowledgments are requested from user *a,* user *a* does not receive any information about successful transmission to the designated target node *D*). Throughout this process, the applications *a* and *d* remain unaware of the routing and splitting, focusing solely on sending and receiving data packages.

### 6.2 Multi-Radio

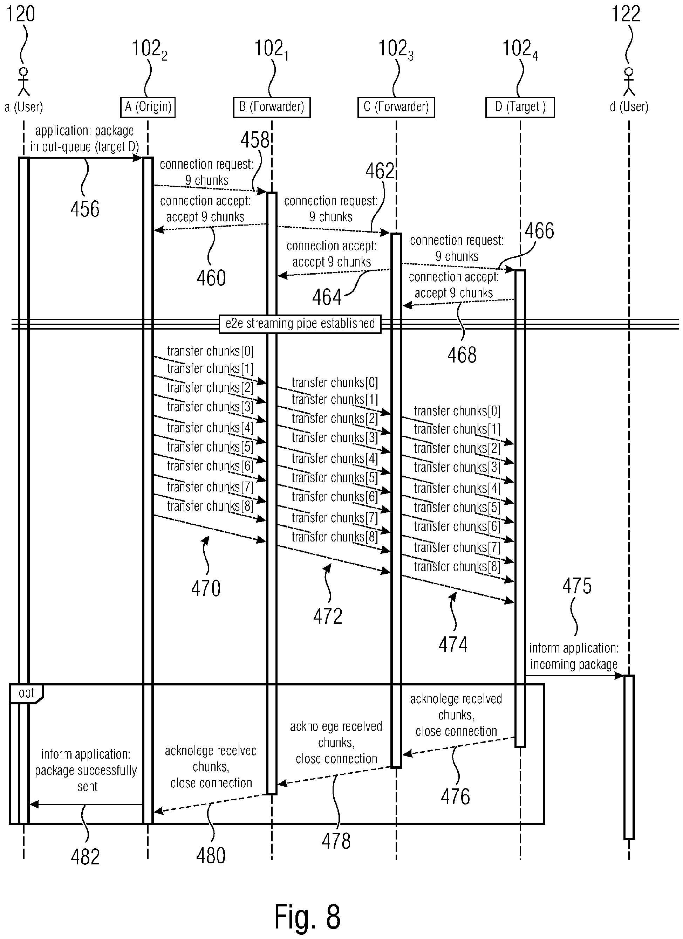

In Fig. 8, another example of data transmission is illustrated, this time utilizing dual radio units on all network nodes, i.e. *A* ≡ (*A*₍₁₎*, A*₍₂₎)*, B* ≡ (*B*₍₁₎*, B*₍₂₎)*, C* ≡ (*C*_{(*1*)}*, C*₍₂₎), and *D* ≡ (*D*₍₁₎*, D*₍₂₎)*,* to enhance efficiency through simultaneous reception and transmission.

Specifically, Fig. 8 shows a sequence diagram of a data transfer between network nodes of a wireless ad-hoc network, each of the network nodes using a single radio. Thereby, in Fig. 8, a simplified data transfer from one nodes application to another is displayed. The ANC takes care of the transport across several hops trough multi-radio streaming connections delivering data to the application of the target node.

The process starts with the application user *a* 120 placing 456 a package in the out-queue with target network node *D* 102₄ (of application user d 122) similar to the single-radio scenario described with respect to Fig. 7. Network node *A* 102₂ identifies the data, seggregates it into 9 chunks and initiates the data sending routine. Through the routing table, network node *B* 102₁ is identified as the best next hop. Therefore, network node *A* 102₂ requests a connection to transmit 9 chunks to network node B 102, (e.g., by transmitting a connection request 458 comprising a target address specifying network node *D* 102₄ as target and indicating that 9 chunks are to be transmitted). Network node *B* 102, accepts the connection request and transmits a connection accept 460 in response.

In turn, network node *B* 102₁ transmits a connection request 462 to network node *C* 102₃, the connection request 462 comprising a target address specifying network node *D* 102₄ as target and indicating that 9 chunks are to be transmitted, where network node *C* 102₃ accepts the connection request and transmits a connection accept 464 in response.

As indicated in Fig. 8, network node A 102₂ transmits 470 the 9 chunks to network node *B* 102₁, where network node *B* 102₁ receives the 9 chunks using a first radio unit (cf. Fig. 5). Network node *B* 102₁, using its second radio unit, forwards 472 the 9 chunks to network node *C* 102₃ while still receiving from network node *A* 102₂. Hence, the network node *B* 102₁ is operating in the streaming role *B* ≡ (*B*₍₁₎*, B*₍₂₎) *= V*₁*.* Network node C 102₃ performs a routing lookup and identifies network node *D* 102₄ as directly reachable. It requests a connection (e.g., by transmitting a connection request 466 to network node *D* 102₄, the connection request 466 comprising a target address specifying network node *D* 102₄ as target and indicating that 9 chunks are to be transmitted, where network node *D* 102₄ accepts the connection request and transmits a connection accept 468 in response) and transmits 474 the chunks to *D*, hence acting as a second streamer in this example, *C* ≡ (*C*₍₁₎*, C*₍₂₎) *= V2,* this way establishing an bidirectional end-to-end connection between network nodes *A* 102₂ and *D* 102₄. The transmission chain is given by (*A ↔ B* ↔ *C* ↔ *D)* or, expressed in terms of roles as (0 ↔ *V*₁ *↔ V₂ ↔ T*)*.*

In the example, the process of establishing connections is displayed before data transmission for better clarity, while network node *A* 102₂ can transfer the first chunks while the connection establishing to the following nodes is handled in parallel.

Upon successful reassembly of the data package, network node *D* 102₄ informs 475 the receiving application user *d.* Optionally, the application *a* requested acknowledgments for successful transmission of the data package, which are sent (backwards) from network node *D* 102₄ to network node *A* 102₂ (e.g., using messages 476, 478, 480, 482) after the data package has been successfully received.

### 7. Hardware Requirements

In embodiments, the network device can be implemented on a generic hardware platform equipped with one or more processors and memory components. The device includes one or multiple radios capable of sending and receiving data over a specific communication protocol, such as Wi-Fi, Bluetooth, or cellular networks. It may feature input/output interfaces to support user interaction, and can run or interface a user application. The de-vice incorporates buffer memory to manage incoming and outgoing data packets efficiently. The specific hardware configuration may vary depending on the implementation and use case.

In another embodiment, the network device may include dedicated firmware configured to execute the method described in this invention. This firmware can be embedded within the memory and optimized for the hardware platform. This approach allows the device to operate independently of external software or operating systems.

In another embodiment, the method of the invention may be implemented in hardware, such as an integrated circuit (IC) or an application-specific integrated circuit (ASIC). In this case, the functionality of the network device, is directly executed by the hardware without relying on external firmware or software, apart from the user application.

### 8. Further embodiments

Embodiments described herein relate to meshed and routed ad-hoc network.

According to embodiments, (e.g., on the application layer) a node is able to send data packages to another node outside its immediate radio range. This can, for instance, be achieved by arranging multiple devices in a chain-like formation with proper spacing between them.

According to embodiments, devices with a single radio unit located in the central region of the transmission chain, i.e. spatially located between other NDs exhibit a repeating pattern between operation roles, i.e. receive-maintain-send-maintain-receive-maintain-send..., when packages are transmitted between either end points of the chain. Those devices act as forwarders (cf. Section 3.2).

According to embodiments, the higher the proportion of multi-radio nodes in the chain, the lower the overall transmission latency for transmissions between chain endpoint nodes. This is caused by the fact that nodes with multiple radio units are able to simultaneously transmit and receive at the same time (they act as streaming units, cf. Section 5).

According to embodiments, nodes in the chain can be dynamically replaced with other (new) devices during operation.

According to embodiments, idle devices, (i.e. those not actively sending or receiving) may transmit small, fixed-size messages (e.g., advertisements) at regular intervals, regardless of whether they are within the radio range of other devices or isolated. This indicates they assume the Maintainer role (compare Section 4.3).

According to embodiments, devices changing their roles may send advertisements at other, irregular intervals.

According to embodiments, idle devices receiving advertisements can propagate them to other nodes. These reflected advertisements may not byte-identical to the originals, as certain meta-information is modified.

According to embodiments, devices equipped with a single radio may temporarily pause advertisements while transmitting (sending or receiving) larger streams of payload data.

According to embodiments, when moving away from a simple chain-like topology, as exemplarily assumed above, to a more complex network topology, placing a heavy transmission load on multiple devices may result in individual nodes frequently switching between sending, receiving, and maintenance roles. Maintenance activity can be indicated by periodic advertisements. Furthermore, the ANC may balance the transmission loads by utilizing all possible routes, resulting in a more or less balanced transmission workload of the individual nodes.

Embodiments described herein can be applied to any use case where individual agents need to exchange data with each other via wireless communication. Given the particular customization towards low power consumption and highly volatile conditions, embodiments can be used, for example, in the following areas:
- simultaneous localization and mapping (SLAM) on a fleet of Autonomous Mobile Robots (AMR) [18, 19, 20, 21],
- navigation for autonomous swarms of drones, in particular determination of points of interest during flight time beyond the line of sight [22, 23, 24, 25, 26, 27],
- local preprocessing of data on wireless sensor networks (WSN) of massive loT applications, such as agriculture monitoring [28, 29], and/or
- Disaster relief and emergency operation, where temporary artificial communication networks are installed when traditional infrastructure is compromised [30, 31, 32, 33, 34, 35].

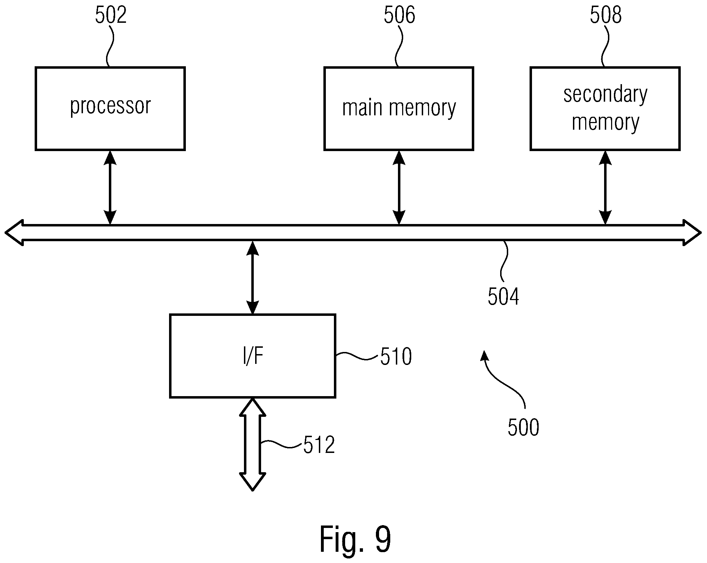

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 9 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### List of References

[1] Torsten Ohlenforst, Moritz Schreiber, Felix Kreyß, and Manuel Schrauth. Enabling distributed inference of large neural networks on resource constrained edge devices using ad hoc networks. In International Symposium on Distributed Computing and Artificial Intelligence, pages 145-154. Springer, 2023.
[2] Wazir Zada Khan, Ejaz Ahmed, Saqib Hakak, Ibrar Yaqoob, and Arif Ahmed. Edge computing: A survey. Future Generation Computer Systems, 97:219-235, August 2019.
[3] Xiaofei Wang, Yiwen Han, Victor C. M. Leung, Dusit Niyato, Xueqiang Yan, and Xu Chen. Conver-gence of edge computing and deep learning: A comprehensive survey. IEEE Communications Surveys, 22(2):869-904, 2020.
[4] Jorge Portilla, Gabriel Mujica, Jin-Shyan Lee, and Teresa Riesgo. The extreme edge at the bottom of the internet of things: A review. IEEE Sensors Journal, 19(9):3179-3190, May 2019.
[5] Charles E Perkins. Ad-hoc on-demand distance vector routing. Proceedings of the Second IEEE Workshop on Mobile Computing Systems and Applications, WMCSA '99, 90-100., 1999.
[6] David B. Johnson, Yih-Chun Hu, and David A. Maltz. The dynamic source routing protocol (DSR) for mobile ad hoc networks for IPv4. RFC, 4728:1-107, 2007.
[7] Loay Abusalah, Ashfaq Khokhar, and Mohsen Guizani. A survey of secure mobile ad hoc routing protocols. IEEE communications surveys & tutorials, 10(4):78-93, 2008.
[8] Charles E Perkins and Pravin Bhagwat. Highly dynamic destination-sequenced distance-vector routing (DSDV) for mobile computers. ACM SIGCOMM computer communication review, 24(4):234-244, 1994.
[9] Zheng Chen, Wenli Zhou, Shuo Wu, and Li Cheng. An adaptive on-demand multipath routing protocol with QoS support for high-speed manet. IEEE Access, 8:44760-44773, 2020.
[10] Bluetooth SIG. Bluetooth mesh networking profile 1.0.1, 2019. Accessed: 2024-12-04.
[11] Bluetooth Special Interest Group. Bluetooth core specification 5.4. Technical report, 2023.
[12] David Pérez-Díaz-De-Cerio, Ángela Hernández-Solana, Mario García-Lozano, Antonio Valdovinos Bardaji,and José-Luis Valenzuela. Speeding up Bluetooth mesh. IEEE Access, 9:93267-93284, 2021.
[13] IEEE Standard for Local and metropolitan area networks-part 15.4: Low-rate wireless personal area networks (LR-WPANs). IEEE Std 802.15.4-2011 (Revision of IEEE Std 802.15.4-2006), pages 1-314, 2011.
[14] Sohaib Bin Altaf Khattak, Moustafa M. Nasralla, Haleem Farman, and Nikumani Choudhury. Performance evaluation of an IEEE 802.15.4-based thread network for efficient internet of things communications in smart cities. Applied Sciences, 13(13), 2023.
[15] IEEE Standard for Information Technology-telecommunications and information exchange between systems-local and metropolitan area networks-specific requirements part 11: Wireless Ian medium access control (mac) and physical layer (phy) specifications amendment 10: Mesh networking. IEEE Std 802.11s-2011 (Amendment to IEEE Std 802.11-2007 as amended by IEEE 802.11k-2008, IEEE 802.11r-2008, IEEE 802.11y-2008, IEEE 802.11w-2009, IEEE 802.11n-2009, IEEE 802.11p-2010, IEEE 802.11z-2010, IEEE 802.11v-2011, and IEEE 802.11u-2011), pages 1-372, 2011.
[16] Meshmerize. User guide, 2024.
[17] Daniel Seither, André König, and Matthias Hollick. Routing performance of wireless mesh networks: A practical evaluation of BATMAN advanced. In 2011 IEEE 36th Conference on Local Computer Networks, pages 897-904, 2011.
[18] Miquel Kegeleirs, Giorgio Grisetti, and Mauro Birattari. Swarm slam: Challenges and perspectives. Frontiers in Robotics and Al, 8, March 2021.
[19] Sajad Saeedi, Michael Trentini, Mae Seto, and Howard Li. Multiple-robot simultaneous localization and mapping: A review: Multiple-robot simultaneous localization and mapping. Journal of Field Robotics, 33(1):3-46, July 2015.
[20] Nathalie Majcherczyk, Daniel Jeswin Nallathambi, Tim Antonelli, and Carlo Pinciroli. Distributed data storage and fusion for collective perception in resource-limited mobile robot swarms. IEEE Robotics and Automation Letters, 6(3):5549-5556, July 2021.
[21] Ragesh K. Ramachandran, Zahi Kakish, and Spring Berman. Information correlated lévy walk exploration and distributed mapping using a swarm of robots. IEEE Transactions on Robotics, 36(5):1422-1441, October 2020.
[22] Jennifer Gielis, Ajay Shankar, and Amanda Prorok. A critical review of communications in multi-robot systems. Current Robotics Reports, 3(4):213-225, August 2022.
[23] K. N. McGuire, C. De Wagter, K. Tuyls, H. J. Kappen, and G. C. H. E. de Croon. Minimal navigation solution for a swarm of tiny flying robots to explore an unknown environment. Science Robotics, 4(35), October 2019.
[24] Fabian Schilling, Fabrizio Schiano, and Dario Floreano. Vision-based drone flocking in outdoor environments. IEEE Robotics and Automation Letters, 6(2):2954-2961, April 2021.
[25] Fabian Schilling, Enrica Soria, and Dario Floreano. On the scalability of vision-based drone swarms in the presence of occlusions. IEEE Access, 10:28133-28146, 2022.
[26] Enrica Soria, Fabrizio Schiano, and Dario Floreano. Distributed predictive drone swarms in cluttered environments. IEEE Robotics and Automation Letters, 7(1):73-80, January 2022.
[27] Konstantinos Bezas, Georgios Tsoumanis, Constantinos T. Angelis, and Konstantinos Oikonomou. Coverage path planning and point-of-interest detection using autonomous drone swarms. Sensors, 22(19):7551, October 2022.
[28] Yogeswaranathan Kalyani and Rem Collier. A systematic survey on the role of cloud, fog, and edge computing combination in smart agriculture. Sensors, 21(17):5922, 2021.
[29] Benjamin Striller Julian Hagert. Adaptive Mesh-Netzwerke zur Steigerung der Konnektivität von Landmaschinen. In 44. GIL - Jahrestagung, Biodiversität fördern durch digitale Landwirtschaft, pages 281-286. Gesellschaft für Informatik e.V., Bonn, 2024.
[30] Christian Raffelsberger and Hermann Hellwagner. Evaluation of MANET routing protocols in a realistic emergency response scenario. In Proceedings of the 10th International Workshop on Intelligent Solutions in Embedded Systems, pages 88-92, 2012.
[31] Shaik Shabana Anjum, Rafidah Md Noor, and Mohammad Hossein Anisi. Review on MANET based communication for search and rescue operations. Wireless personal communications, 94(1):31-52, 2017.
[32] Kirtan Gopal Panda, Shrayan Das, Debarati Sen, and Wasim Arif. Design and deployment of UAV-aided post-disaster emergency network. IEEE access, 7:102985-102999, 2019.
[33] Mansi Peer, Vivek Ashok Bohara, and Anand Srivastava. Multi-UAV placement strategy for disaster-resilient communication network. In 2020 IEEE 92nd Vehicular Technology Conference (VTC2020-Fall), pages 1-7, 2020.
[34] Sanjoy Debnath, Wasim Arif, Sourav Roy, Srimanta Baishya, and Debarati Sen. A comprehensive survey of emergency communication network and management. Wireless Personal Communications, 124(2):1375-1421, 2022.
[35] Maham Waheed, Rizwan Ahmad, Waqas Ahmed, Muhammad Mahtab Alam, and Maurizio Magarini. On coverage of critical nodes in UAV-assisted emergency networks. Sensors, 23(3):1586, 2023.

### Abbreviations

- ND: network device
- ANC: ad-hoc network cluster - collective ensemble of multiple, connected NDs, which form a routed mesh network
- MANET: Mobile Ad hoc Network (MANET)
- B.A.T.M.A.N: Better Approach To Mobile Adhoc Networking - a routing protocol designed for wireless mesh networks (see [12])
- BLE: Bluetooth Low Energy
- RANDLE: routed ad-hoc network based on the BLE routing protocol (see [1])
- TTL: Time To Live - is a field in the header of a network packet that specifies the maximum amount of time or hops the packet is allowed to travel through the network before being discarded.

## Claims

1. First network node (102₁) for a wireless ad-hoc network (100),
wherein the first network node (102₁) is configured to receive from a second network node (102₂) of the wireless ad-hoc network (100) one or more chunks of a data package via a first point-to-point connection,
wherein the one or more chunks comprise a target address information describing a target address of the data package,
wherein the first network node (102₁) is configured to select using a routing information, based on the target address information, a third network node (102₃) of the wireless ad-hoc network (100),
wherein the first network node (102₁) is configured to transmit the one or more chunks or a further processed version thereof to the third network node (102₃) via a second point-to-point connection.

2. First network node (102₁) according to claim 1,
wherein the third network node (102₃) is a target network node indicated by the target address information,
or wherein the third network node (102₃) is part of a multi-hop path along one or more further network nodes via point-to-point connections to the target network node.

3. First network node (102₁) according to claim 1 or 2,
wherein the first network node (102₁) is configured to establish the first point-to-point connection to the second network node (102₂) by receiving a first connection request message from the second network node (102₂) and transmitting a first connection accept message to the second network node (102₂).
and/or wherein the first network node (102₁) is configured to establish the second point-to-point connection to the third network node (102₃) by transmitting a second connection request message to the third network node (102₃) and receiving a second connection accept message from the third network node (102₃).

4. First network node (102₁) according to one of the claims 1 to 3,
wherein the first network node (102₁) is configured, in a receiving mode, to receive the one or more chunks of the data package via the first point-to-point connection from the second network node (102₃),
wherein the first network node (102₁) is configured, after receiving the one or more chunks of the data package, to switch from the receiving mode into a sending mode,
wherein the first network node (102₁) is configured, in the sending mode, to transmit the one or more chunks of the data package via the second point-to-point connection to the third network node (102₃).

5. First network node (102₁) according to one of the claims 1 to 4,
wherein the first network node (102₁) is configured, in a maintainer mode, to receive advertisements and to update the routing information based on the advertisements,
and/or wherein the first network node (102₁) is configured, in the maintainer mode, to transmit an advertisement.

6. First network node (102₁) according to one of the claims 1 to 5,
wherein the first network node (102₁) is configured, in a streamer mode, to receive the one or more chunks via the first point-to-point connection from the second network node (102₂) using a first radio unit and to concurrently transmit already received chunks of the one or more chunks via the second point-to-point connection to the third network node (102₃) using a second radio unit.

7. First network node (102₁) according to claim 6,
wherein the first network node (102₁) is configured to prioritize the streamer mode in which the first radio unit and the second radio unit are used concurrently over another mode in which the first radio unit and the second radio unit are used non-concurrently.

8. First network node (102₁) according to one of the claims 1 to 7,
wherein the first network node (102₁) and at least one out of the second network node (102₂) and the third network node (102₃) are functionally similar or identical devices.

9. First network node (102₁) according to one of the claims 1 to 8,
wherein the routing information allows the first network node (102₁) to select the third network node (102₃) out of a plurality of network nodes of the wireless ad-hoc network (100) based on a local path decision mechanism.

10. First network node (102₁) according to one of the claims 1 to 9,
wherein the first network node (102₁) is implemented to operate based on one of the following protocols:
- Bluetooth,
- Meshmerize,
- BATMAN,
- Randle.

11. First network node (102₁) for a wireless ad-hoc network (100),
wherein the first network node (102₁) is configured to receive from a second network node (102₂) of the wireless ad-hoc network one or more chunks of a data package via a first point-to-point connection,
wherein the one or more chunks comprise a target address information describing a target address of the data package,
wherein the first network node (102₁) is configured to determine whether the first network node (102₁) is addressed by the target address,
wherein in case the first network node (102₁) is addressed by the target address, the first network node (102₁) is configured to, after receiving a required number of chunks of the data package, to combine the chunks in order to obtain the data package, wherein in case the first network node (102₁) is not addressed by the target address, the first network node (102₁) is configured to select using a routing information, based on the target address information, a third network node (102₃) of the wireless ad-hoc network (100) and to transmit the one or more chunks or a further processed version thereof to the third network node (102₃) via a second point-to-point connection.

12. First network node (102₁) according to claim 11,
wherein the first network node (102₁) is configured to provide the data package to an application.

13. Method for operating a first network node (102₁) for a wireless ad-hoc network (100), the method comprising:
receiving from a second network node (102₂) of the wireless ad-hoc network one or more chunks of a data package via a first point-to-point connection, wherein the one or more chunks comprise a target address information describing a target address of the data package,
selecting fusing a routing information, based on the target address information, a third network node (102₃) of the wireless ad-hoc network,
transmitting the one or more chunks or a further processed version thereof to the third network node (102₃) via a second point-to-point connection.

14. Method for operating a first network node (102₁) for a wireless ad-hoc network (100), the method comprising:
receiving from a second network node (102₂) of the wireless ad-hoc network (100) one or more chunks of a data package via a first point-to-point connection,
wherein the one or more chunks comprise a target address information describing a target address of the data package,
determining whether the first network node (102₁) is addressed by the target address, wherein, in case the first network node (102₁) is addressed by the target address, the chunks are combined by the first network node (102₁) in order to obtain the data package after receiving a required number of chunks of the data package,
wherein in case the first network node (102₁) is not addressed by the target address, a third network node (102₃) of the wireless ad-hoc network is selected using a routing information, based on the target address information, and the one or more chunks or a further processed version thereof are transmitted to the third network node via a second point-to-point connection.

15. Computer program for performing the method according to claim 14, when the computer program runs on a processor, microprocessor or software defined radio.

## Amended claims

### Amended claims in accordance with Rule 137(2) EPC.

1. First network node (102₁) for a wireless ad-hoc network (100),
wherein the first network node (102₁) is configured to receive from a second network node (102₂) of the wireless ad-hoc network (100) two or more chunks of a data package via a first point-to-point connection,
wherein the two or more chunks comprise a target address information describing a target address of the data package,
wherein the first network node (102₁) is configured to select using a routing information, based on the target address information, a third network node (102₃) of the wireless ad-hoc network (100),
wherein the first network node (102₁) is configured to transmit the two or more chunks or a further processed version thereof to the third network node (102₃) via a second point-to-point connection,
wherein the first network node (102₁) is configured to establish the first point-to-point connection to the second network node (102₂) by receiving a first connection request message from the second network node (102₂) and transmitting a first connection accept message to the second network node (102₂), wherein the first connection request message comprises the target address information and indicates a number of chunks to be transmitted,
wherein the first network node (102₁) is configured to establish the second point-to-point connection to the third network node (102₃) by transmitting a second connection request message to the third network node (102₃) and receiving a second connection accept message from the third network node (102₃), wherein the second connection request message comprises the target address information and indicates a number of chunks to be transmitted.

2. First network node (102₁) according to claim 1,
wherein the third network node (102₃) is a target network node indicated by the target address information,
or wherein the third network node (102₃) is part of a multi-hop path along one or more further network nodes via point-to-point connections to the target network node.

3. First network node (102₁) according to one of the claims 1 to 2,
wherein the first network node (102₁) is configured, in a receiving mode, to receive the one or more chunks of the data package via the first point-to-point connection from the second network node (102₃),
wherein the first network node (102₁) is configured, after receiving the one or more chunks of the data package, to switch from the receiving mode into a sending mode,
wherein the first network node (102₁) is configured, in the sending mode, to transmit the one or more chunks of the data package via the second point-to-point connection to the third network node (102₃).

4. First network node (102₁) according to one of the claims 1 to 3,
wherein the first network node (102₁) is configured, in a maintainer mode, to receive advertisements and to update the routing information based on the advertisements,
and/or wherein the first network node (102₁) is configured, in the maintainer mode, to transmit an advertisement.

5. First network node (102₁) according to one of the claims 1 to 4,
wherein the first network node (102₁) is configured, in a streamer mode, to receive the one or more chunks via the first point-to-point connection from the second network node (102₂) using a first radio unit and to concurrently transmit already received chunks of the one or more chunks via the second point-to-point connection to the third network node (102₃) using a second radio unit.

6. First network node (102₁) according to claim 5,
wherein the first network node (102₁) is configured to prioritize the streamer mode in which the first radio unit and the second radio unit are used concurrently over another mode in which the first radio unit and the second radio unit are used non-concurrently.

7. First network node (102₁) according to one of the claims 1 to 6,
wherein the first network node (102₁) and at least one out of the second network node (102₂) and the third network node (102₃) are functionally similar or identical devices.

8. First network node (102₁) according to one of the claims 1 to 7,
wherein the routing information allows the first network node (102₁) to select the third network node (102₃) out of a plurality of network nodes of the wireless ad-hoc network (100) based on a local path decision mechanism.

9. First network node (102₁) according to one of the claims 1 to 8,
wherein the first network node (102₁) is implemented to operate based on one of the following protocols:
- Bluetooth,
- Meshmerize,
- BATMAN,
- Randle.

10. First network node (102₁) for a wireless ad-hoc network (100),
wherein the first network node (102₁) is configured to receive from a second network node (102₂) of the wireless ad-hoc network one or more chunks of a data package via a first point-to-point connection,
wherein the one or more chunks comprise a target address information describing a target address of the data package,
wherein the first network node (102₁) is configured to determine whether the first network node (102₁) is addressed by the target address,
wherein in case the first network node (102₁) is addressed by the target address, the first network node (102₁) is configured to, after receiving a required number of chunks of the data package, to combine the chunks in order to obtain the data package,
wherein in case the first network node (102₁) is not addressed by the target address, the first network node (102₁) is configured to select using a routing information, based on the target address information, a third network node (102₃) of the wireless ad-hoc network (100) and to transmit the one or more chunks or a further processed version thereof to the third network node (102₃) via a second point-to-point connection,
wherein the first network node (102₁) is configured to establish the first point-to-point connection to the second network node (102₂) by receiving a first connection request message from the second network node (102₂) and transmitting a first connection accept message to the second network node (102₂), wherein the first connection request message comprises the target address information and indicates a number of chunks to be transmitted,
wherein the first network node (102₁) is configured to establish the second point-to-point connection to the third network node (102₃) by transmitting a second connection request message to the third network node (102₃) and receiving a second connection accept message from the third network node (102₃), wherein the second connection request message comprises the target address information and indicates a number of chunks to be transmitted.

11. First network node (102₁) according to claim 10,
wherein the first network node (102₁) is configured to provide the data package to an application.

12. Method for operating a first network node (102₁) for a wireless ad-hoc network (100), the method comprising:
receiving from a second network node (102₂) of the wireless ad-hoc network one or more chunks of a data package via a first point-to-point connection, wherein the one or more chunks comprise a target address information describing a target address of the data package,
selecting, based on the target address information, a third network node (102₃) of the wireless ad-hoc network,
transmitting the one or more chunks or a further processed version thereof to the third network node (102₃) via a second point-to-point connection,
wherein the first point-to-point connection is established by receiving a first connection request message from the second network node (102₂) and transmitting a first connection accept message to the second network node (102₂), wherein the first connection request message comprises the target address information and indicates a number of chunks to be transmitted,
wherein the second point-to-point connection is established by transmitting a second connection request message to the third network node (102₃) and receiving a second connection accept message from the third network node (102₃), wherein the second connection request message comprises the target address information and indicates a number of chunks to be transmitted.

13. Method for operating a first network node (102₁) for a wireless ad-hoc network (100), the method comprising:
receiving from a second network node (102₂) of the wireless ad-hoc network (100) one or more chunks of a data package via a first point-to-point connection,
wherein the one or more chunks comprise a target address information describing a target address of the data package,
determining whether the first network node (102₁) is addressed by the target address,
wherein, in case the first network node (102₁) is addressed by the target address, the chunks are combined by the first network node (102₁) in order to obtain the data package after receiving a required number of chunks of the data package,
wherein in case the first network node (102₁) is not addressed by the target address, a third network node (102₃) of the wireless ad-hoc network is selected using a routing information, based on the target address information, and the one or more chunks or a further processed version thereof are transmitted to the third network node via a second point-to-point connection,
wherein the first point-to-point connection is established by receiving a first connection request message from the second network node (102₂) and transmitting a first connection accept message to the second network node (102₂), wherein the first connection request message comprises the target address information and indicates a number of chunks to be transmitted,
wherein the second point-to-point connection is established by transmitting a second connection request message to the third network node (102₃) and receiving a second connection accept message from the third network node (102₃), wherein the second connection request message comprises the target address information and indicates a number of chunks to be transmitted.

14. Computer program comprising instructions which, when the program is executed by a computer, cause the computer to carry out the method according to claim 12 or 13.
